(19) Europäisches Patentamt
European Patent Office
Office européen des brevets

(11) EP 2 463 239 A1

(12) **DEMANDE DE BREVET EUROPEEN**

(43) Date de publication:
**13.06.2012 Bulletin 2012/24**

(21) Numéro de dépôt: **11176751.3**

(22) Date de dépôt: **02.02.2010**

(51) Int Cl.:
***C02F 1/10*** (2006.01) ***F28C 3/04*** (2006.01)
*C02F 103/08* (2006.01)

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**
Etats d'extension désignés:
**AL BA RS**

(30) Priorité: **02.02.2009 FR 0950643**

(62) Numéro(s) de document de la (des) demande(s) initiale(s) en application de l'article 76 CBE:
**10708269.5 / 2 391 584**

(27) Demande déposée antérieurement:
**02.02.2010 PCT/FR2010/050169**

(71) Demandeur: **De Souza, Guillaume**
**92130 Issy-les-Moulineaux (FR)**

(72) Inventeur: **De Souza, Guillaume**
**92130 Issy-les-Moulineaux (FR)**

(74) Mandataire: **Tarrère, Blandine**
**Cabinet Lhermet La Bigne & Remy**
**11 boulevard de Sébastopol**
**75001 Paris (FR)**

Remarques:
Cette demande a été déposée le 05-08-2011 comme demande divisionnaire de la demande mentionnée sous le code INID 62.

(54) **Unité de prétraitement d'eau au moyen d'un liquide fluoré**

(57) La présente invention concerne une unité de prétraitement d'eau, en particulier d'eau saline, par traitement thermique et/ou ionique. Elle concerne plus particulièrement une unité de prétraitement comportant un échangeur de chaleur et/ou ionique à contact direct présentant une phase continue ou dispersée qui comporte un liquide fluoré non miscible à l'eau, de densité supérieure à 1,25.

**EP 2 463 239 A1**

**Description**

La présente invention concerne une unité de prétraitement d'eau, en particulier d'eau saline, notamment par traitement thermique et/ou ionique.

Du fait d'une pénurie croissante en eau douce, des méthodes de dessalement des eaux salines (eau de mer, eaux saumâtres, saumures) sont de plus en plus recherchées. Cependant, le coût associé à ces méthodes reste élevé de même que leur impact environnemental. En effet, les méthodes existantes font souvent intervenir des technologies encore coûteuses, (procédés physiques, chimiques, biologiques et/ou membranaires). Une solution pour améliorer ces technologies serait d'augmenter significativement le taux de conversion de l'eau saline en eau douce. Or, les méthodes actuelles de prétraitement des eaux salines, en particulier de l'eau de mer ne permettent pas aujourd'hui d'augmenter ce taux de conversion au-delà de 50% du fait de la présence de sels entartrants. Par « taux de conversion de l'eau saline en eau douce », on entend la fraction d'eau douce produite par unité d'eau saline traitée. Augmenter ce taux de conversion devrait permettre :

- d'augmenter la production relative d'eau douce,
- de réduire la quantité relative d'eau saline à pré-traiter,
- de réduire la taille des unités de dessalement,
- de réduire la consommation énergétique liée au dessalement,
- de réduire la quantité de saumure produite en augmentant la teneur en sel des rejets pour un traitement moins coûteux des rejets, et,
- de réduire l'impact environnemental du fait d'une moindre pollution thermique et/ou chimique.

Cette impossibilité d'augmenter le taux de conversion est principalement due aux problèmes d'entartrage liés aux sels de calcium et de magnésium. En effet, certains de ces sels sont à faible solubilité et d'autres sont à solubilité inverse : ils précipitent dès que la température est trop haute. De plus, pour l'eau de mer, des sels tels que le $CaCO_3$, le $Mg(OH)_2$ ou le $CaSO_4$ précipitent à température ambiante dès que le taux de conversion atteint les 50 %, ce qui représente un stade critique (où la concentration en sel du concentrât est le double de celle du flux d'alimentation). L'entartrage des équipements génère une réduction des sections de passage, une réduction des coefficients de transfert thermique des échangeurs et/ou une obturation des pores des membranes.

Afin de lutter contre cet entartrage, différents traitements ont été proposés :

- la décarbonatation par la chaux $Ca(OH)_2$: ce procédé de prétraitement présente les inconvénients inhérents à la manipulation et à l'emploi de la chaux. De plus, deux fois plus de sels $CaCO_3$ étant précipités, le volume de boues de rejet à traiter est également multiplié par deux. Ce procédé reste peu satisfaisant dans la mesure où il génère également du carbonate de magnésie difficile à éliminer et doit souvent être complété par l'ajout d'autres produits chimiques, tel que du $Na_2CO_3$, destinés à faire précipiter les autres ions présents dans l'eau à traiter.
- la décarbonatation par l'acide : comme précédemment, cette technique présente des inconvénients relatifs à la manipulation et à l'ajout régulier d'acide forts ($H_2SO_4$, HCl,...). En outre, cette technique nécessite l'utilisation d'un inhibiteur de corrosion, ajoutant ainsi un coût et une pollution chimique supplémentaires.
- la germination : cette technique vise à provoquer les dépôts de tartre sur des germes cristallins que l'on a introduits dans l'eau à traiter. Cette technique présente un risque de prise en masse au cours des arrêts, ce qui explique vraisemblablement son faible développement.
- l'adoucissement sur résine : avec cette technologie, les ions calcium $Ca^{2+}$ et $Mg^{2+}$ sont remplacés grâce à l'utilisation de résines échangeuses d'ions, ces résines étant par la suite régénérées. Les inconvénients relatifs à ce procédé sont son emploi en cycle généralement discontinu, des rendements de fixation et de régénération de la résine bas et son coût d'installation élevé;
- l'emploi de produits tartrifuges : cette technique, la plus utilisée, consiste à injecter à très faible dose (quelques ppm) des polyphosphates, organophosphates ou des polymères carboxyliques afin d'éviter ou de minimiser les dépôts de tartre. Cette technique présente des inconvénients dus à la manutention et au dosage des produits tartrifuges ainsi qu'à leur faible résistance aux températures supérieures à 70°C. En outre, ces produits peuvent augmenter l'encrassement par les bio-organismes et ne permettent pas d'augmenter significativement le taux de conversion en eau.

Pour lutter contre les phénomènes d'encrassement, il existe également des solutions de clarification et de filtration. Par « encrassement », on vise l'accumulation gélatineuse de boues sur les parois d'une conduite, résultant de l'activité biologique des organismes présents dans l'eau. Ces solutions consistent généralement en l'utilisation de filtres à sable, de filtres à bougies, d'ultrafiltration ou de microfiltration, de coagulation et de floculation, de décantation et de traitement d'oxydation par chloration choc.

Enfin, pour lutter contre la corrosion résultant de la présence de dioxygène et de dioxyde de carbone dissous, d'une teneur élevée en ions chlorure, d'une conductivité élevée de l'eau ou d'une pollution, diverses techniques peuvent être utilisées parmi lesquelles l'utilisation d'un dé-aérateur, la décarbonatation à l'acide ($H_2SO_4$, HCl), l'utilisation de métaux en acier inoxydable pour les circuits à haute pression, et l'utilisation d'agents chimiques anti-mousse.

Toutes ces solutions nécessitent la mise en oeuvre de produits chimiques dont la manutention et le traitement avant rejet dans l'environnement sont sources de problèmes. En outre, cela génère une augmentation notable des coûts.

L'invention porte donc sur une unité de prétraitement permettant une nette augmentation du taux de conversion de l'eau à traiter en eau douce grâce à la mise en oeuvre d'un échangeur à contact direct permettant d'obtenir une extraction de certains ions et/ou une précipitation contrôlée de certains sels de métaux légers (métaux alcalins ou alcalino-terreux, béryllium, aluminium, magnésium) sous une forme carbonate (voire sulfate) pour éviter une précipitation entartrante tout en minimisant l'usage des réactifs chimiques usuels.

Un échangeur à contact direct forme un dispositif industriel assurant un transfert entre deux fluides en l'absence de paroi matérielle séparant les deux fluides. Ce transfert peut notamment être thermique (échangeur de chaleur à contact direct) et/ou ionique (échangeur d'ions à contact direct). En l'espèce, l'échangeur de chaleur et/ou d'ions à contact direct vise un transfert thermique et/ou ionique entre une phase fluorée et l'eau à traiter. Par « eau à traiter », on entend les eaux salines (eau de mer, eaux saumâtre, saumures) et les eaux résiduelles (eaux dont la pollution et l'impureté minérale ou biologique résultent directement ou indirectement d'une activité humaine). De manière avantageuse, l'échangeur selon l'invention est particulièrement adapté au traitement d'eaux polluées par des hydrocarbures. Un échangeur comprend par exemple une colonne.

Plus particulièrement, on prévoit donc selon l'invention une unité de prétraitement d'eau, en particulier d'eau saline, comprenant un échangeur à contact direct dont la phase fluorée continue ou dispersée comprend un liquide fluoré non miscible à l'eau de densité supérieure à 1,25. De préférence, l'échangeur à contact direct est un échangeur de chaleur et/ou un échangeur ionique. En effet, selon la phase fluorée utilisée, le transfert opéré entre la phase fluorée et l'eau à traiter pourra être un transfert thermique ou un transfert ionique ou simultanément, un transfert thermique et ionique.

Le liquide fluoré non miscible à l'eau est par exemple hydrophobe.

L'unité de prétraitement selon l'invention permet d'améliorer notablement le taux de conversion en eau douce des procédés de dessalement par l'emploi d'un prétraitement thermique particulièrement efficace remplaçant au moins pour partie un prétraitement chimique.

L'utilisation d'un échangeur de chaleur (thermique) à contact direct permet d'élever suffisamment la température de l'eau à traiter afin d'assurer :

- le dégazage naturel de cette eau en gaz incondensable tels que le dioxygène, le diazote et le dioxyde de carbone,
- la précipitation des sels à solubilité inverse de type $CaCO_3$, $Mg(OH)_2$, $CaSO_4$,
- la précipitation des sels à faible solubilité à ces niveaux de température tels que les $CaF_2$, $BaSO_4$, $SrSO_4$,
- la mort des micro-organismes aérobies ou anaérobies par un temps de résidence suffisant à un niveau de température trop élevé pour un maintien des fonctions biologiques, et,
- la vaporisation des composés volatils organiques dissous.

Ces phénomènes ont pour conséquence d'éviter les problèmes de corrosion dus à la présence de gaz corrosifs tels que le dioxygène ou le dioxyde de carbone, d'éviter l'encrassement, et surtout de précipiter les sels relatifs à la dureté carbonatée à une étape du procédé dans laquelle cette précipitation est sans conséquence pour le dispositif.

En particulier, cette unité de prétraitement va permettre de mettre en oeuvre, en aval, des procédés fonctionnant à plus haute température tels que des procédés de distillation à effets multiples (MED), de distillation flash multiétagée (MSF) ou à membrane, pour une amélioration en productivité et en efficacité énergétique. De tels procédés combinés à l'unité de prétraitement selon l'invention vont permettre d'accéder à des taux de conversion dépassant 50 % et pouvant atteindre 90 %.

Par ailleurs, la combinaison de la haute densité de ces fluides fluorés non miscibles à l'eau avec la tension d'interface spécifique entre les liquides fluorés d'échange thermique et l'eau à traiter permet aux sels précipités d'être flottants à l'interface de ces deux phases. On a donc une récupération aisée de ces sels au niveau de l'échangeur ou du bassin de cristallisation.

L'utilisation d'un échangeur d'ions (ionique) permet, dans le cas du prétraitement d'une eau chargée en ions (lorsque l'échangeur ionique à contact direct est un échangeur d'absorption), d'échanger les ions depuis l'eau à traiter chargée en ions vers la phase fluorée. Ainsi, l'eau prétraitée est adoucie et/ou dessalée en fonction des ions échangés ou extraits depuis l'eau à traitée vers la phase fluorée.

L'utilisation d'un échangeur d'ions (ionique) permet également, dans le cas de la régénération d'une phase fluorée chargée en ions (lorsque l'échangeur ionique à contact direct est un échangeur de régénération), d'échanger les ions depuis la phase fluorée chargée en ions vers une eau de régénération. Ainsi, la phase fluorée est déchargée

de ses ions et peut être réutilisée pour servir de phase fluorée pour le prétraitement d'une eau chargée en ions.

Avantageusement, le liquide fluoré non miscible à l'eau est défini par un rapport m/p égal à un réel inférieur ou égal à 1 avec m le nombre d'atomes d'hydrogène et p le nombre d'atomes de fluor contenus dans la molécule du liquide fluoré non miscible à l'eau.

De préférence, le liquide fluoré non miscible à l'eau de la phase fluorée est un composé de formule brute $C_nH_mF_pN_qO_xS_y$ dans laquelle :

- C, H, F, N, O, S représentent respectivement un atome de carbone, d'hydrogène, de fluor, d'azote, d'oxygène et de soufre,
- n est un nombre entier compris entre 3 et 25, de préférence entre 3 et 12, bornes incluses,
- m est un nombre entier compris entre 0 et 27, de préférence entre 0 et 20, bornes incluses,
- p est un nombre entier compris entre 5 et 54, de préférence entre 5 et 27, bornes incluses,
- q est un nombre entier compris entre 0 et 6, de préférence entre 0 et 3, bornes incluses,
- x est un nombre entier compris entre 0 et 10, de préférence entre 0 et 7, bornes incluses, et
- y est un nombre entier compris entre 0 et 6, de préférence entre 0 et 3, bornes incluses.

L'invention vise en particulier les liquides appartenant à une des familles suivantes : les liquides perfluorés (PFC) ou hydrofluorés (HFC) et leurs dérivés et les liquides ioniques.

Elle vise plus particulièrement les perfluoroéthers (PFE), les hydrofluoroéthers (HFE), les perfluoropolyéthers (PFPE), les hydrofluoropolyéthers (HFPE), les amines perfluorées (PFA), de préférence ternaires (PFTA), les amines hydrofluorées (HFA), de préférence ternaires (HFTA), les polyamines perfluorées (PFPA), Les polyamines hydrofluorées (HFPA), les perfluorothioéthers (PFTE), les hydrofluorothioéthers (HFTE), les perfluoropolythioéthers (PFPTE), les hydrofluoropolythioéthers (HFPTE), les hydrofluorothioéthersamines (HFTEA), les perfluoroazacyclohexanes, les perfluoroétheramines, les hydrofluoroétheramines (HFEA), les perfluorothioétheramines, les perfluoroéthylènes alcools, les perfluorocyclohexanes, les hydrofluorocyclohexanes, les perfluorodecalins, les perfluorocycloethers, les hydrofluorocycloethers, les perfluorocyclothioethers, les hydrofluorocyclothioethers et les liquides ioniques hydrophobes qui peuvent être basés sur les ions bis(trifluoromethylsulfonyl)imide ($TF2N^-$).

Ces molécules perfluorées ou hydrofluorées pourront être à chaîne carbonée droite ou ramifiée. De préférence, ces molécules seront à chaîne carbonée droite afin de favoriser une température d'ébullition maximale et de minimiser la miscibilité à l'eau. De manière avantageuse, les éventuels atomes d'hydrogènes seront préférentiellement placés sur les fonctions acides ou amines ou à défaut sur une chaîne carbonée à un ou deux atomes de carbone.

L'emploi d'un tel liquide d'échange thermique permet d'assurer un transfert thermique maximal avec l'eau à traiter. De plus, ces fluides sont à la fois non toxiques, non inflammables, inertes, non destructeurs de la couche d'ozone, non polaires ou faiblement polaires, incolores et inodores, voire non bioaccumulables et biodégradables.

Par « perfluorocarbures », on entend les composés de formule brute $C_nF_p$, dans laquelle C, n, F et p sont définis tels que précédemment.

Par « dérivés de perfluorocarbures », on vise plus particulièrement des composés perfluorocarbures substitués par au moins un hétéroatome sélectionné parmi l'azote, l'oxygène et/ou le soufre. Il s'agit donc de composés de formules brutes $C_nF_pN_q$, $C_nF_pO_x$, $C_nF_pS_y$, $C_nF_pN_qO_x$, $C_nF_pO_xS_y$, $C_nF_pN_qSy$, $C_nF_pN_qO_xS_y$, dans lesquelles C, F, N, O, S, n, p, q, x, y sont tels que définis précédemment. De façon plus préférentielle, il s'agit de perfluorocyclohexanes, de perfluorodécalins, de perfluoroalkylamines, -dialkylamine ou - trialkylamines, de perfluoroéthers, de perfluorocycloéthers, de perfluoropolyéthers, de perfluorothioéthers ou de perfluoropolythioéthers.

De manière préférentielle, on choisira le liquide de la phase fluorée parmi les liquides hydrofluorés (ou hydrofluorocarbures) pour leur impact environnemental relativement faible, notamment en termes de participation au phénomène de réchauffement climatique.

Par « hydrofluorocarbures », on vise les composés de formule brute $C_nH_mF_p$, dans laquelle C, H, F, n, m et p sont tels que définis précédemment.

De préférence, le liquide de la phase fluorée comporte un composé hydrofluorocarbure ou dérivé,.

Par « dérivés d'hydrofluorocarbures », on entend des composés hydrofluorocarbures comportant au moins un hétéroatome sélectionné parmi l'azote, l'oxygène et/ou le soufre. Il s'agit plus particulièrement de composés de formules brutes $C_nH_mF_pN_q$, $C_nH_mF_pO_x$, $C_nH_mF_pS_y$, $C_nH_mF_pO_xS_y$, $C_nH_mF_pN_qS_y$, $C_nH_nF_pN_qO_x$ et $C_nH_mF_pN_qO_xS_y$ dans lesquelles C, H, F, N, O, S et n, m, p, q, x, y sont tels que définis précédemment. De préférence, ces composés sont l'hydrofluorocyclohexane, les hydrofluorodécalins, les hydrofluoroéthers, les hydrofluorocycloéthers, les hydrofluoropolyéthers, les hydrofluorothioéthers, les hydrofluoropolythioéthers, les hydrofluoroalkylamines, les hydrofluorodialkylamines, les hydrofluoropolyalkylamines, les hydrofluorohydrazines, les hydrofluorothioéthéralkylamines, les hydrofluoroéthéramines, les hydrofluoroétherpolyamines et les liquides ioniques.

De préférence, on choisira des perfluorocarbures et hydrofluorocarbures saturés en hydrogène et fluor. De préférence, les composés seront choisis de manière telle que pour m, p, n et q tels que définis précédemment:

- m+p=2n+q+2, pour les composés ne comportant pas de cycle,
- m+p=2n+q , pour les composés comportant un cycle ou une liaison double avec l'oxygène ou le souffre, et,
- m+p=2n+q, pour les composés comportant deux cycles ou deux liaisons doubles avec l'oxygène ou le souffre ou un cycle et une liaison double avec l'oxygène ou un souffre.

Les composés préférés selon l'invention sont en particulier décrits dans le tableau 1 de l'exemple 1 ci-après (« liquide fluoré hydrophobe »).

Dans un mode de réalisation, l'échangeur est un échangeur d'ions (ionique) dans lequel la phase fluorée comporte, en outre, un liquide fluoré d'échange ionique comprenant un ou plusieurs tensioactif(s) fluoré(s) ionique(s) et/ou non ionique(s). De préférence, le liquide fluoré d'échange ionique est constitué d'un ou plusieurs tensioactif(s) fluoré(s) ionique(s) et/ou non ionique(s). Dans ce mode de réalisation, on utilise principalement le liquide fluoré non miscible à l'eau pour sa fonction de solvant, mais pas pour sa fonction d'échange thermique. Dans ce cas, la phase fluorée est sous forme continue ou dispersée.

Dans un autre mode de réalisation, l'échangeur est un échangeur de chaleur et d'ions, c'est-à-dire un échangeur thermique et ionique. Dans ce cas, on utilise le liquide fluoré non miscible à l'eau pour sa fonction d'échange thermique et de solvant. Dans ce ou ces cas, la phase fluorée est sous une forme continue.

Un tensioactif fluoré non ionique pourra assurer simultanément une fonction d'échange ionique et de limitation de la coalescence des gouttes d'eau dans la phase fluorée. Dans le cas où la phase fluorée comprend plusieurs tensioactifs fluorés non ioniques, chaque tensioactif fluoré non ionique pourra assurer simultanément une fonction d'échange ionique et de limitation de la coalescence des gouttes d'eau dans la phase fluorée. Un tensioactif fluoré non ionique pourra assurer uniquement une fonction d'échange ionique ou une fonction de limitation de la coalescence des gouttes d'eau dans la phase fluorée. Dans le cas où la phase fluorée comprend plusieurs tensioactifs fluorés non ioniques, chaque tensioactif fluoré non ionique pourra assurer uniquement une fonction d'échange ionique ou une fonction de limitation de la coalescence des gouttes d'eau dans la phase fluorée. Enfin, un ou plusieurs tensioactifs non ioniques pourront assurer uniquement une fonction d'échange ionique ou une fonction de limitation de la coalescence des gouttes d'eau dans la phase fluorée alors que un ou plusieurs tensioactifs non ioniques pourront assurer simultanément une fonction d'échange ionique et une fonction de limitation de la coalescence des gouttes d'eau dans la phase fluorée.

Dans le cas d'un prétraitement (par exemple par absorption) des ions d'une eau à traiter, le tensioactif fluoré ionique et/ou non ionique assure une fonction d'échange ou d'extraction ionique, c'est-à-dire d'échange ou d'extraction des ions depuis l'eau à traiter vers la phase fluorée. Inversement, dans le cas d'une régénération d'une phase fluorée chargée en ions, la phase fluorée chargée en ions provenant, par exemple, du traitement des ions d'une eau à traiter, le tensioactif fluoré ionique et/ou non ionique assure une fonction d'échange ou d'extraction ionique depuis la phase fluorée chargée en ions vers une eau de régénération de façon à régénérer la phase fluorée.

Selon un mode de réalisation préférentiel, la phase fluorée comportera de 0,5 à 30% en volume de tensioactifs fluorés ioniques et/ou des tensioactifs fluorés non ioniques, préférentiellement, de 1 à 5%, bornes incluses de tensioactifs fluorés ioniques et/ou des tensioactifs fluorés non ioniques.

De préférence, le liquide fluoré d'échange ionique comprend un liquide (ou tensioactif) échangeur fluoré anionique (ELFA) et/ou un liquide (ou tensioactif) échangeur fluoré cationique (ELFC). En variante, le liquide fluoré d'échange ionique comprend plusieurs ELFA et/ou ELFC. De tels composés peuvent être choisis, par exemple, parmi les sels de carboxylate perfluoré (perfluorocarboxylate), les sels de carboxylate hydrofluoré, les sels d'alkoxydes perfluorés (perfluoroalkoxyde), les sels d'alkoxydes hydrofluorés, les sels de dialkoxydes perfluorés (perfluorodialkoxyde), les sels de dialkoxydes hydrofluorés, les sels de carboximidates perfluorés (perfluorocarboximidate), les sels de carboximidates hydrofluorés, les sels de sulfonate perfluorés (perfluorosulfonates), les sels de sulfonate hydrofluorés, les sels de sulfate perfluorés (perfluorosulfates), les sels de sulfate hydrofluorés, les sels d'éthersulfonate perfluorés (perfluoroéthersulfonates), les sels d'éther sulfonate hydrofluorés, les sels d'alkylammoniums perfluorés (perfluoroalkylammonium), les sels d'alkylammoniums hydrofluorés, les sels de dialkylimidazoliums perfluorés (perfluorodialylimidazolium), les sels de dialkylimidazoliums hydrofluorés, les sels d'alkylphosphoniums perfluorés (perfluoroalkylphosphonium), les sels d'alkylphosphoniums hydrofluorés, les sels de dialkyloxazolidinium perfluorés (perfluorodialkyloxazolidinium), les sels de dialkyloxazolidinium hydrofluorés, les sels de dialkyl-1-aza-3,5-dioxacyclohexane perfluorés (perfluorodialkyl-1-aza-3,5-dioxacyclohexane), les sels de dialkyl-1-aza-3,5-dioxacyclohexane hydrofluorés, les sels d'alkylborates perfluorés (perfluoroborates), les sels d'alkylborates hydrofluorés, les sels de dialkyldiboracyclopentadiènes perfluorés (perfluorodialkyldiboracyclopentadiene), les sels de dialkyldiboracyclopentadiènes hydrofluorés, les sels de dialkyloxaboralidinium perfluorés (perflorodialkyloxaboralidinium), les sels de dialkyloxaboralidinium hydrofluorés, les sels de dialkyl-1-bora-3,5-dioxacyclohexane perfluorés (perfluorodialkyl-1-bora-3,5-dioxacyclohexane) et les sels de dialkyl-1-bora-3,5-dioxacyclohexane hydrofluorés. A titre d'exemple, l'exemple 3 comporte une liste de tensioactifs fluorés ioniques.

De préférence, les tensioactifs fluorés non ioniques sont choisis parmi les éthers couronnes hydrofluorés ou perfluorés, les perfluoroaldéhydes, les hydrofluoroaldéhydes, les hydrofluoroétheraldéhydes et les hydrofluorothioéthersaldéhydes dont des exemples sont donnés dans l'exemple 2.

Avantageusement, le tensioactif fluoré ionique et/ou non ionique d'échange ou d'extraction ionique est défini par un rapport a/b égal à un réel inférieur ou égal à 1 avec a le nombre d'atomes d'hydrogène et b le nombre d'atomes de fluor contenus dans la molécule du tensioactif fluoré ionique et/ou non ionique. Ainsi, ces tensioactifs fluorés présentent une inflammabilité relativement faible et une solubitilité relativement élevée dans le liquide fluoré non miscible à l'eau de la phase fluorée qui sert alors de solvant et/ou de liquide d'échange thermique.

De préférence:

- Le liquide échangeur fluoré anionique comprend une tête polaire cationique comprenant un hétéroatome d'azote et/ou de phosphore et/ou d'oxygène et/ou de souffre.
- Le liquide échangeur fluoré cationique comprend une tête polaire anionique comprenant un hétéroatome de bore et/ou d'aluminium et/ou d'oxygène et/ou de souffre.

De tels liquides échangeurs fluorés anioniques et cationiques permettent d'éviter la précipitation des paires constituées par l'échangeur liquide fluoré et l'ion extrait de l'eau à traiter.

La figure 4 illustre le phénomène à l'origine de l'échange ionique. En particulier, elle représente une goutte d'eau contenant au moins des ions sodium et calcium, immergée dans un liquide fluoré hydrophobe (LFH) dans lequel sont dissous, à hauteur de quelques pourcents, des tensioactifs fluorés ioniques comprenant un liquide échangeur fluoré cationique (ELFC). Un tel liquide échangeur comprend une chaîne fortement fluorée, hydrophobe et à tête anionique hydrophile. Ces tensioactifs à têtes anioniques viennent se placer à l'interface Eau-LFH. Lors du déplacement à contre-courant de la goutte d'eau dans le LFH, celle-ci entre en contact avec de nombreuses molécules de tensioactifs à têtes anioniques ce qui autorise un échange de cations à l'interface Eau-LFH, entre ces tensioactifs à têtes anioniques et l'eau. Dans le cas du prétraitement (par exemple par absorption) des ions d'une eau chargée à traiter (lorsque l'échangeur ionique à contact direct est un échangeur d'absorption), il y a, par exemple, extraction des cations calcium de l'eau par échange de cations entre la phase fluorée et l'eau par l'intermédiaire de ces tensioactifs à têtes anioniques solubles dans le LFH mais non solubles dans l'eau. Au contraire, dans le cas de la régénération d'une phase fluorée chargée en ions (lorsque l'échangeur ionique à contact direct est un échangeur de régénération), il y a apport des calcium à l'eau de régénération.

L'utilisation d'une phase fluorée comportant ce type de liquide fluorée d'échange ionique permet d'éliminer les cations bivalents ($Ca^{2+}$, $Mg^{2+}$, $Sr^{2+}$, $Ba^{2+}$, ...) et trivalents ainsi que des métaux potentiellement présents dans l'eau à traiter ($Fe^{2+}$, $Mn^{2+}$, $Zn^{2+}$, ...). En particulier, les ions responsables de la dureté de l'eau et les métaux nuisibles sont ainsi extraits. A titre d'exemple, on peut donner la réaction suivante :

$$2\,[ELFC][Na^+]_{phase\ fluo.} + [Ca^{2+}]_{eau} <=> [ELFC]_2[Ca^{2+}]_{phase\ fluo.} + 2\,[Na^+]_{eau}$$

La figure 5 illustre le même phénomène dans le cas d'une goutte d'eau contenant au moins des ions carbonates, immergée dans le même liquide fluoré hydrophobe (LFH) dans lequel sont dissous, à hauteur de quelques pourcents, des tensioactifs fluorés ioniques comprenant un liquide échangeur fluoré anionique (ELFA). Un tel liquide échangeur comprend une chaîne fortement fluorée, hydrophobe et à tête cationique hydrophile. De la même manière qu'à la figure 4, les tensioactifs à têtes cationiques viennent se placer à l'interface Eau-LFH et on observe un échange d'anions à l'interface Eau-LFH, entre ces tensioactifs à têtes cationiques et l'eau. Dans le cas du prétraitement (par exemple par absorption) des ions d'une eau à traiter (lorsque l'échangeur ionique à contact direct est un échangeur d'absorption), il y a, par exemple, extraction des ions carbonates de l'eau par échange d'anions entre la phase fluorée et l'eau par l'intermédiaire de ces tensioactifs à têtes cationiques solubles dans le LFH mais non solubles dans l'eau. Au contraire, dans le cas de la régénération d'une phase fluorée chargée en ions (lorsque l'échangeur ionique à contact direct est un échangeur de régénération), il y a apport des ions carbonates à l'eau de régénération.

L'utilisation d'une phase fluorée comportant ce type de liquide fluoré d'échange ionique permet d'éliminer les anions monovalents ($NO_3^-$) et bivalents ($CO_3^{2-}$, $SO_4^{2-}$, ...) responsables notamment de la dureté de l'eau. A titre d'exemple, on peut donner la réaction suivante :

$$2\,[ELFA][Cl^-]_{phase\ fluo.} + [CO_3^{2-}]_{eau} <=> [ELFA]_2[CO_3^{2-}]_{phase\ fluo.} + 2\,[Cl^-]_{eau}$$

La figure 6 illustre un échange ionique utilisant simultanément des liquides échangeurs fluorés cationiques (ELFC) et des liquides échangeurs fluorés anioniques (ELFA). Afin d'assurer la neutralité électronique dans la phase continue, les ELFC et ELFA s'associent en paire d'ions échangeurs dans la phase fluorée. Ces paires d'ions échangeurs

viennent se placer à l'interface Eau-LFH et, du fait de la plus grande affinité de l'ELFC et l'ELFA respectivement pour les cations et les anions de l'eau à traiter, se dissocient, ce qui autorise un échange à l'interface Eau-LFH, entre respectivement les ELFC et ELFA et des cations et des anions de l'eau à traiter. Dans le cas du prétraitement (par exemple par absorption) des ions d'une eau à traiter (lorsque l'échangeur ionique à contact direct est un échangeur d'absorption), il y a extraction des cations et des anions de l'eau par l'intermédiaire de ces ions échangeurs solubles dans le LFH mais non solubles dans l'eau. Au contraire, dans le cas de la régénération d'une phase fluorée chargée en ions (lorsque l'échangeur ionique à contact direct est un échangeur de régénération), il y a apport des cations et des anions à l'eau.

L'utilisation d'une phase fluorée comportant ce type de liquide d'échange ionique permet d'extraire de l'eau les cations et les anions monovalents, bivalents et trivalents. A titre d'exemple, on peut donner les réactions suivantes permettant de dessaler et/ou de diminuer la dureté de l'eau:

$$[ELFA][ELFC]_{phase\ fluo.} + [Na^{+}]_{eau} + [Cl^{-}]_{eau} <=> [ELFA][Cl^{-}]_{phase\ fluo.} + [ELFC][Na^{+}]_{phase\ fluo.}$$

$$2\ [ELFA][ELFC]_{phase\ fluo.} + [CO_3^{2-}]_{eau} + [Ca^{2+}]_{eau} <=> [ELFA]_2[CO_3^{2-}]_{phase\ fluo.} + [ELFC]_2[Ca2^{+}]_{phase\ fluo.}$$

On peut également utiliser un liquide échangeur fluoré non ionique [ELFNI] seul ou en combinaison avec un ou plusieurs ELFA ou ELFC. L'ELFNI échange ou extrait les ions depuis la phase aqueuse vers la phase fluorée par complexation des ions. Dans le cas d'un ELFNI, on peut donner la réaction suivante permettant de dessaler et/ou de diminuer la dureté de l'eau:

$$[ELFNI]_{phase\ conti.} + [Na^{+}]_{eau} <=> [ELFNI][Na^{+}]_{phase\ cont.}$$

Dans un autre mode de réalisation, l'échangeur est un échangeur de chaleur dans lequel la phase fluorée comporte, en outre, un tensioactif fluoré non ionique. De préférence, la phase fluorée est sous une forme continue. Les tensioactifs fluorés non ioniques permettent de stabiliser le mélange diphasique constitué par les gouttes d'eau salines dispersées dans la phase fluorée et de favoriser l'échange thermique tout en limitant la coalescence des gouttes d'eau dans la phase fluorée. Une liste de tensioactifs fluorés non ioniques est donnée dans le tableau 2 de l'exemple 2.

Avantageusement, le tensioactif fluoré non ionique est défini par un rapport e/f égale à un réel inférieur ou égal à 1 avec e le nombre d'atomes d'hydrogène et f le nombre d'atomes de fluor contenus dans la molécule du tensioactif fluoré non ionique.

De préférence, la phase fluorée continue comportera de 0,5 à 30% en volume de tensioactifs non ioniques, préférentiellement, de 1 à 5%, bornes incluses de tensioactifs non ioniques.

Avantageusement, l'unité de prétraitement selon l'invention comportera une unité de cristallisation. Cette unité de cristallisation pourra par exemple prendre la forme d'un bassin de cristallisation à saturation avec ou sans germination ou coagulants et à clarification.

De préférence, l'échangeur de chaleur à contact direct de l'unité de prétraitement selon l'invention comportera un dispositif de recyclage de la phase continue. Ce dispositif de recyclage permet à la fois une économie en termes de consommables, mais également une économie d'énergie thermique. Dans le cas où la phase fluorée comporte au moins un liquide fluoré à tête ionique, le dispositif de recyclage comportera en outre un dispositif de régénération du liquide fluoré à tête échangeuse d'ions. Le dispositif de régénération sera de préférence une colonne de régénération à contact direct employant au moins une partie de l'eau traitée ou de la saumure issue du système de prétraitement ou de dessalement pour que soit réalisée la réaction inverse.

Plus particulièrement, l'échangeur de chaleur à contact direct sera composé de deux parties : une partie de refroidissement visant à refroidir l'eau à traiter et une partie de réchauffement visant à réchauffer l'eau à traiter, la phase fluorée continue qui se refroidit dans la partie de réchauffement étant réutilisée en tant que phase fluorée continue qui se réchauffe dans la partie de refroidissement.

L'unité de prétraitement selon l'invention peut fonctionner selon au moins deux modes :

- un premier mode travaillant « à chaud » c'est-à-dire qu'un collecteur assurant l'apport thermique de la colonne fonctionne à des températures de l'ordre de 80 à 200°C. Dans ce premier mode, l'eau à traiter est introduite sous pression à une température ambiante (15 à 30°C), et réchauffée par échange de chaleur avec le liquide de la phase fluorée continue, ce réchauffement permettant la précipitation des sels ou le déplacement des équilibres entre ions à l'interface eau-LFH et l'évacuation des gaz éventuels, puis est refroidie afin de retrouver une température ambiante

avant envoi vers l'unité de dessalement ;

- un second mode travaillant « à froid » c'est-à-dire que le collecteur assurant l'apport thermique de la colonne fonctionne à des températures de l'ordre de -4°C à 10°C. Dans ce second mode, l'eau à traiter est introduite à température ambiante dans l'échangeur où elle est refroidie pour approcher la température de solidification de l'eau saline en dessous de 0°C. Elle est alors envoyée vers l'unité de dessalement travaillant à froid (par gel de l'eau) avant d'être réinjectée dans l'échangeur afin d'être réchauffée par le liquide de la phase fluorée continue et d'être rejetée à température ambiante.

Dans le cas d'un échangeur de chaleur à contact direct travaillant à haute température, l'unité de cristallisation permettra de récupérer les sels précipités qui flotteront à l'interface de la phase fluorée et de l'eau à traiter.

On propose également un procédé de prétraitement de l'eau mettant en oeuvre une unité de prétraitement selon l'invention et comprenant les étapes suivantes :

- introduction de la phase fluorée au niveau d'une extrémité supérieure d'une des parties de l'échangeur et introduction de l'eau au niveau d'une extrémité inférieure d'une des parties de l'échangeur de façon à réaliser un échange de chaleur et/ou d'ions à contre-courant entre l'eau ascendante et la phase fluorée descendante, et,
- récupération de l'eau prétraitée.

De préférence, le procédé peut comprendre une étape de compression de l'eau à traiter, la compression ayant lieu à une pression prédéterminée. En outre, l'introduction de l'eau peut être réalisée sous pression, par exemple sous forme de gouttes d'eau.

Dans un mode de réalisation, le procédé comprend, en outre, une étape d'introduction de la phase fluorée sous forme continue et dans lequel l'introduction de l'eau est faite sous forme dispersée. On utilise ce procédé dans le cas d'un échangeur de chaleur et/ou d'ions.

Plus particulièrement, dans le cas d'un échangeur fonctionnant comme échangeur thermique, le procédé comportera les étapes suivantes :

- introduction de la phase fluorée sous forme continue au niveau d'une extrémité supérieure d'une des parties de l'échangeur et introduction de l'eau , à température ambiante sous forme dispersée, par exemple sous la forme de gouttes d'eau, au niveau d'une extrémité inférieure d'une des parties de l'échangeur de façon à réaliser un échange de chaleur à contre-courant entre l'eau dispersée ascendante et la phase fluorée continue descendante, et,
- envoi de l'eau vers l'unité de cristallisation.

Ce procédé peut comporter en outre les étapes suivantes :

- compression de l'eau à traiter, la compression ayant lieu à une pression prédéterminée,
- introduction de l'eau, par exemple sous pression, sous forme dispersée au niveau d'une extrémité inférieure de l'autre partie de l'échangeur de façon à réaliser un échange de chaleur à contre-courant entre l'eau dispersée ascendante et la phase fluorée continue descendante, et,
- récupération de l'eau à température ambiante.

Avantageusement, la pression de l'eau est comprise entre 1 et 15 bars absolus (« bar abs »).

Dans un autre mode de réalisation, le procédé comprend, en outre, une étape d'introduction de la phase fluorée sous forme dispersée et dans lequel l'introduction de l'eau est faite sous forme continue. On utilise ce procédé dans le cas d'un échangeur uniquement ionique.

De plus, lorsque le procédé met en oeuvre une unité de prétraitement comprenant un échangeur d'ions, le procédé peut comporter, en outre, les étapes suivantes:

- récupération de la phase fluorée obtenue au niveau de l'extrémité inférieure d'un premier échangeur, dit de prétraitement,
- introduction de la phase fluorée récupérée au niveau d'une extrémité supérieure d'une des parties d'un second échangeur, dit de régénération, de l'unité de prétraitement,
- introduction d'une eau de régénération au niveau d'une extrémité inférieure d'une des parties de l'échangeur de régénération de façon à réaliser un échange d'ions à contre-courant entre l'eau de régénération ascendante et la phase fluorée récupérée descendante,
- récupération de la phase fluorée régénérée, et
- introduction de la phase fluorée régénérée au niveau d'une partie supérieure de l'échangeur de prétraitement.

L'invention a également pour objet un procédé de traitement de l'eau, comprenant un procédé de prétraitement tel que défini ci-dessus et comportant, en outre, une étape de traitement par dessalement postérieure à l'étape de récupération de l'eau prétraitée.

Optionnellement, l'eau de régénération comprend au moins en partie l'eau dessalée lors de l'étape de traitement.

L'invention porte également sur l'utilisation d'un échangeur de chaleur et d'ions à contact direct comportant comme phase continue ou dispersée un liquide fluoré non miscible à l'eau de densité supérieure à 1,25 pour le traitement de l'eau et en particulier pour le prétraitement d'eaux salines.

L'invention sera mieux comprise à la lecture de la description qui va suivre, donnée uniquement à titre d'exemple et faite en se référant aux dessins dans lesquels :

- la figure 1 présente un premier mode de réalisation dans lequel l'échangeur de chaleur à contact direct travaille à haute température,
- la figure 2 présente un second mode de réalisation dans lequel l'échangeur de chaleur à contact direct travaille à basse température,
- la figure 3 présente un troisième mode de réalisation dans lequel l'échangeur à contact direct fonctionne à la fois en échange de chaleur et en échange d'ions soit en l'espèce à haute température et avec une phase continue comportant un liquide fluoré hydrophobe et un tensioactif ionique à tête échangeuse d'ions,
- la figure 4 illustrant la présence de tensioactifs à têtes anioniques autour d'une goutte d'eau,
- la figure 5 illustrant la présence de tensioactifs à têtes cationiques autour d'une goutte d'eau, et
- la figure 6 schématisant l'échange de cations et d'anions entre la phase fluorée et l'eau à traiter,
- la figure 7 présente un quatrième mode de réalisation dans lequel l'échangeur à contact direct fonctionne à la fois en échange de chaleur et en échange d'ions soit en l'espèce à haute température et avec une phase continue comportant un liquide fluoré hydrophobe et des tensioactifs cationique et anionique à têtes échangeuses d'ions.

Exemple 1 : Liquides d'échange thermique.

**Tableau 1 :**

| LIQUIDE FLUORE HYDROPHOBE | | | | | | |
|---|---|---|---|---|---|---|
| Nom | Formule Semi-développée | Mw (g/mol) | Teb (°C) | Tfus (°C) | ρ 25°C (kg/m$^3$) | Formule Brute |
| Eau (pour rappel) | HOH | 18 | 100 | 0 | 997 | $H_2O$ |
| **PERFLUOROCARBURES** | | | | | | |
| PFC - Perfluorooctane | $CF_3$ $(CF_2)_6$ $CF_3$ | 438 | 106 | -25 | 1765 | $C_8F_{18}$ |
| PFC - Perfluorononane | $CF_3(CF_2)_7CF_3$ | 488 | 118 | -16 | 1788 | $C_9F_{20}$ |
| HYDROFLUOROCARBURES | | | | | | |
| HFC - 1,1,1H- Perfluorooctane | $CH_3(CF_2)_6CF_3$ | 384 | 109* | -76* | 1445* | $C_8H_3F_{15}$ |
| HFC - 1,1,1H- Perfluorononane | $CH_3(CF_2)_7CF_3$ | 434 | 121* | -66* | 1475* | $C_9H_3F_{17}$ |
| **PERFLUOROCYCLOHEXANES** | | | | | | |
| PFCH - Perfluoro-1,3-dimethylcyclohexane | $C_6F_{10}(CF_3)_2$ | 400 | 102 | -55 | 1828 | $C_8F_{16}$ |
| PFCH - Perfluoro-1,3,5-trimethylcyclohexane | $C_6F_9(CF_3)_3$ | 450 | 127 | -68 | 1888 | $C_9F_{18}$ |
| **HYDROFLUOROCYCLOHEXANES** | | | | | | |
| HFCH - 1,1,1H-Perfluoromethylcyclohexane | $C_6F_{11}(CH_3)$ | 296 | 100* | -88* | 1540* | $C_7H_3F_{11}$ |
| HFCH - 1,1,1H-Perfluoro-1,2-dimethylcyclohexane | $C_6F_{10}(CF_3)$ $(CH_3)$ | 346 | 127* | -63* | 1580* | $C_8H_3F_{13}$ |
| **PERFLUORDECALINS** | | | | | | |
| PFD - Perfluorodecalin | $C_4F_8>(CF)_2<C_4F_8$ | 462 | 142 | -10 | 1930 | $C_{10}F_{18}$ |
| PFMD - Perfluoro(methyldecalin) | PFD-$(CF_3)$ | 512 | 160 | -70 | 1970 | $C_{11}F_{22}$ |
| **HYDROFLUORODECALINS** | | | | | | |
| HFMD - 1,1,1H- Perfluoro (methyldecalin) | PFD-$(CH_3)$ | 458 | 185* | -77 | 1690* | $C_{11}H_3F_{19}$ |
| **PERFLUORODIALKYLAMINE** | | | | | | |
| Perfluorobutylpentylamine | $(C_4F_9)$ $(C_5F_{11})NF$ | 521 | 99* | -45* | 1725* | $C_9F_{21}N$ |
| Perfluorodipentylamine | $(C_5F_{11})_2NF$ | 571 | 115* | -35* | 1755* | $C_{10}F_{23}N$ |
| **HYDROFLUORODIALKYLAMINES** | | | | | | |

(suite)

| LIQUIDE FLUORE HYDROPHOBE | | | | | | |
|---|---|---|---|---|---|---|
| Nom | Formule Semi-développée | Mw (g/mol) | Teb (°C) | Tfus (°C) | ρ 25°C (kg/m$^3$) | Formule Brute |
| Méthyl-1 perfluoropropylpentylamine | $(CH_3-C_3F_6)\ (C_5F_{11})\ NF$ | 467 | 113* | -52* | 1575* | $C_9H_3F_{18}N$ |
| Méthyl-1 perfluorobutylpentylamine | $(CH_3-C_4F_8)\ (C_5F_{11})NF$ | 517 | 128* | -41* | 1600* | $C_{10}H_3F_{20}N$ |
| **PERFLUOROTRIALKYLAMINES** | | | | | | |
| Perfluoroethyldipropylamine | $(C_2F_5)\ (C_3F_7)_2\ N$ | 471 | 101 | -65 | 1760 | $C_8F_{19}N$ |
| PFTA- Perfluorotripropylamine | $(C_3F_7)_3N$ | 521 | 130 | -52 | 1820 | $C_9F_{21}N$ |
| **HYDROFLUOROTRIALKYLAMINES** | | | | | | |
| Méthyl-1 perfluoromethyldiethylamine | $(CH_3CF_2)\ (C_3F_7)_2N$ | 417 | 98* | -64* | 1550* | $C_8H_3F_{16}N$ |
| Méthyl-1 perfluoroethyldipropylamine | $(CH_3C_2F_4)\ (C_3F_7)_2\ N$ | 467 | 113* | -52* | 1575* | $C_9H_3F_{18}N$ |
| **PERFLUOROAZACYCLOHEXANES** | | | | | | |
| Perfluoro-N-methylpipéridine | $_{cycle}(-C_5F_{10}-N-)-(CF_3)$ | 333 | 102* | -50* | 1750* | $C_6F_{13}N$ |
| **PERFLUOROETHERS** | | | | | | |
| PFE - Perfluorodibutyl ether | $(C_4F_9)_2O$ | 454 | 102 | -48* | 1860* | $C_8F_{18}O$ |
| PFE - Perfluorodipentyl ether | $(C_5F_{11})_2O$ | 554 | 129* | -38* | 1925* | $C_{10}F_{22}O$ |
| **HYDROFLUOROETHERS** | | | | | | |
| HFE - Methyl-Perfluorohexyl ether | $C_6F_{13}-O-CH_3$ | 350 | 98 | -38 | 1660 | $C_7H_3F_{13}O$ |
| HFE - 2-trifluoro-methyl-3-ethoxydodecofluorohexane | $C_2H_5-O-CF(C_3F_7)CF(CF_3)_2$ | 414 | 128 | -100 | 1614 | $C_9H_5F_{15}O$ |
| **PERFLUOROCYCLOETHERS** | | | | | | |
| PFCE - Perfluoro-2-butyltetrahydrofuran | $C_4F_9-FC<(-C_3F_6-O\ )cycle$ | 416 | 102 | -88 | 1770 | $C_8F_{16}O$ |
| **HYDROFLUOROCYCLOETHERS** | | | | | | |
| HFCE - 1H,1H,1H-Perfluoro-2-butyltetrahydrofuran | $CH_3-C_3F_6-FC<\ (-C_3F_8-O-)cycle$ | 362 | 105* | -92* | 1650* | $C_8H_3F_{13}O$ |
| **PERFLUOROPOLYETHERS** | | | | | | |
| PFPE - Perfluorotriglyme | $CF_3-(OC_2F_4)_3-OCF_3$ | 502 | 106 | -80* | 1875* | $C_8F_{18}O_4$ |
| PFPE - HT110 | $CF_3-((OCFCF_2)-CF_3)-(OCF_2)_4-OCF_3$ | 584 | 110 | -110 | 1710 | $C_9F_{20}O_6$ |

(suite)

| LIQUIDE FLUORE HYDROPHOBE | | | | | | |
|---|---|---|---|---|---|---|
| Nom | Formule Semi-développée | Mw (g/mol) | Teb (°C) | Tfus (°C) | ρ 25°C (kg/m$^3$) | Formule Brute |
| **HYDROFLUOROPOLYETHERS** | | | | | | |
| HFPE - 1H,1H,1H-Perfluorotriglyme | $CF_3-(OC_2F_4)_3-OCH_3$ | 448 | *138** | *-80** | *1600** | $C_8H_3F_{15}O_4$ |
| HFPE - ZT130 | $HF_2C-(OC_2F_4)-(OCF_2)_4-OCF_2H$ | 498 | 130 | -114 | 1650 | $C_8H_2F_{16}O_6$ |
| **PERFLUOROSULFURES OU PERFLUOROTHIOETHERS** | | | | | | |
| PFE - Perfluorodipropyl thioether | $(C_3F_7)_2S$ | 370 | *100** | *-71** | *1850** | $C_6F_{14}S$ |
| PFE - Perfluorodibutyl thioether | $(C_4F_9)_2S$ | 470 | *135** | *-46** | *1900** | $C_8F_{18}S$ |
| **HYDROFLUOROSULFURES OU HYDROFLUOROTHIOETHERS** | | | | | | |
| 1-Methylsulfanyl-PerfluoroPentane | $C_5F_{11}-S-CH_3$ | 316 | *109** | *-82** | *1530** | $C_6H_3F_{11}S$ |
| 1-Methylsulfanyl-PerfluoroHexane | $C_6F_{13}-S-CH_3$ | 366 | *127** | *-69** | *1560** | $C_7H_3F_{13}S$ |
| **PERFLUOROCYCLOTHIOETHERS** | | | | | | |
| Perfluoro-2-methyl-1-thiacyclohexane | $CF_3-FC< (-C_4F_8-S-)_{cycle}$ | 332 | *104** | *-70** | *1700** | $C_6F_{12}S$ |
| **LIQUIDES IONIQUES** | | | | | | |
| 1-éthyl-3-methylimidazolium bis (trifluoromethylsulfonyl)imide | $1,3-C_2H_5-CH_{3-cycle}(C_3H_3N_2)^+ (CF_3SO_2)_2N^-$ | 391 | 417 Déc. | -16 | 1520 | $C_8H_{11}F_6N_3O_4S_2$ |
| 1-Butyl-1-methylpyrrolidinium bis (trifluoromethylsulfonyl)imide | $1,1-C_4H_9-CH_{3-cycle}(C_4H_8N)^+ (CF_3SO_2)_2N^-$ | 422 | > 350 | -50 | 1400 | $C_{11}H_{20}F_6N_2O_4S_2$ |
| 1-Butyl-3-methylpyridinium bis (trifluoromethylsulfonyl)imide | $1,3-C_4H_9-CH_{3-cycle}(C_5H_4N)^+ (CF_3SO_2)_2N^-$ | 430 | > 350 | 16 | 1400 | $C_{12}H_{16}F_6N_2O_4S_2$ |
| 1-éthyl-3-methylimidazolium bis (pentafluoroéthylsulfonyl)imide | $1,3-C_2H_5-CH_{3-cycle}(C_3H_3N_2)^+ (CF_3CF_2SO_2)_2N-$ | 491 | > 350 | -1 | 1340 | $C_{10}H_{11}F_{10}N_3O_4S_2$ |
| * *Températures d'ébullitions, de fusion et densités estimées par une méthode d'analyse de groupes basée sur plus de 600 molécules à propriétés physiques connues ou partiellement connues.* | | | | | | |

Exemple 2 : Tensioactifs fluorés non ioniques.

**Tableau 2 :**

| TENSIOACTIFS FLUORES NON IONIQUES | | | | | | |
|---|---|---|---|---|---|---|
| Nom | Formule Semi-développée | Mw (g/mol) | Teb (°C) | HLB | ρ 25°C (kg/m$^3$) | Formule Brute |
| **PERFLUOROALDEHYDE** | | | | | | |
| Perfluorooctanal | $C_7F_{15}$-HC=O | 398 | *108** | *1,1* | *1800** | $C_3HF_{15}O$ |
| Perfluorononanal | $C_8F_{17}$-HC=O | 448 | *125** | *0,2* | *1840** | $C_9HF_{17}O$ |
| **HYDROFLUOROALDEHYDE** | | | | | | |
| 2,2H-perfluoroheptanal | $C_5F_{11}$-$CH_2$-HC=O | 312 | *109** | *2,4* | *1800** | $C_7H_3F_{11}O$ |
| 2,2H-perfluorooctanal | $C_6F_{13}$-$CH_2$-HC=O | 362 | *127** | *1,5* | *1825** | $C_8H_3F_{13}O$ |
| **HYDROFLUOROETHERALDEHYDE** | | | | | | |
| 2,2H-3-oxy-perfluorohexanal | $C_4F_9$-O-$CH_2$-HC=O | 278 | *111** | *4,5* | *1870** | $C_6H_3F_9O_2$ |
| 2,2H-3-oxy-perfluorooctanal | $C_6F_{13}$-O-$CH_2$-HC=O | 378 | *148** | *2,8* | *1925** | $C_8H_3F_{13}O_2$ |
| **HYDROFLUOROTHIOETHERALDEHYDE** | | | | | | |
| 2,2H-3-thio-perfluorohexanal | $C_4F_9$-S-$CH_2$-HC=O | 294 | *149** | *3,5* | *1900** | $C_6H_3F_9OS$ |
| **PERFLUOROALKYLAMINES** | | | | | | |
| PerfluoroHexylamine | $C_6F_{13}$-$NH_2$ | 335 | *104** | *1,0** | *1730** | $C_6H_2F_{13}N$ |
| PerfluoroHeptylamine | $C_7F_{15}$-$NH_2$ | 385 | *121** | *0,8** | *1760** | $C_7H_2F_{15}N$ |
| **HYDROFLUOROALKYLAMINES** | | | | | | |
| 1,1H-PerfluoroHexylamine | $C_5F_{11}$-$CH_2$-$NH_2$ | 299 | *124** | *1,1** | *1550** | $C_6H_4F_{11}N$ |
| **PERFLUOROALKYLETHERAMINES** | | | | | | |
| PerfluoroHexyloxyamine | $C_6F_{13}$-O-$NH_2$ | 351 | *102** | *1,8** | *1830** | $C_6H_2F_{13}NO$ |
| **HYDROFLUOROEALKYLTHERAMINES** | | | | | | |
| 1,1H-PerfluoroButyloxymethylamine | $C_4F_9$-O-$CH_2$-$NH_2$ | 265 | *126** | *2,4** | *1620** | $C_5H_4F_9NO$ |
| **PERFLUOROALKYLTHIOETHERAMINES** | | | | | | |
| PerfluoroButylThioétheramine | $C_4F_9$-S-$NH_2$ | 267 | *110** | *3,6** | *1530** | $C_4H_2F_9NS$ |
| PerfluoroPentylThioétheramine | $C_5F_{11}$-S-$NH_2$ | 317 | *128** | *3,0** | *1560** | $C_5H_2F_{11}NS$ |
| **PERFLUOROALKYL ETHYLENE ALCOOL** | | | | | | |
| Perfluorobutyletheréthylène alcool | $C_4F_9O$-$CH_2CH_2$-OH | 280 | *176** | *5,8** | *1685** | $C_6H_5F_9O_2$ |
| Perfluoropentyletheréthylène alcool | $C_5F_{11}$-O-$CH_2CH_2$-OH | 330 | *195** | *4,9** | *1700** | $C_7H_5F_{11}O_2$ |
| **PERFLUORODIALKYLETRERCOURONNES** | | | | | | |
| Perfluoro dibutane12-éthercouronne-4 | / | 864 | / | / | / | $C_{16}F_{32}O_4$ |

(suite)

| TENSIOACTIFS FLUORES NON IONIQUES | | | | | | |
|---|---|---|---|---|---|---|
| Nom | Formule Semi-développée | Mw (g/mol) | Teb (°C) | HLB | ρ 25°C (kg/m$^3$) | Formule Brute |
| Perfluoro dipentane15-éthercouronne-5 | / | 1080 | / | / | / | $C_{20}F_{40}O_5$ |
| Perfluoro dihexane18-éthercouronne-6 | / | 1296 | / | / | / | $C_{24}F_{48}O_6$ |
| Perfluoro diheptane21-éthercouronne-7 | / | 1512 | / | / | / | $C_{28}F_{56}O_7$ |
| **HYDROFLUORODIALKYLETHERCOURONNES** | | | | | | |
| hydrofluoro dihexane18-éthercouronne-6 | / | 1152 | | | | $C_{16}H_8F_{40}O_6$ |
| * Températures d'ébullition et densités estimées par une méthode d'analyse de groupes basée sur plus de 600 molécules à propriétés physiques connues ou partiellement connues. *HLB : balance hydrophile/lipophile.* | | | | | | |

Exemple 3 : Tensioactifs fluorés ioniques.

**Tableau 3 :**

| TENSIOACTIFS FLUORES IONIQUES | | | | | | |
|---|---|---|---|---|---|---|
| Nom | Formule Semi-développée | Mw (g/mol) | Teb (°C) | Tfus (°C) | ρ 25°C (kg/$m^3$) | Formule Brute |
| **PERFLUOROALCOOLS** | | | | | | |
| Perfluoropentanol-1 | $C_5F_{11}$-OH | 286 | 111* | -46* | 1765* | $C_5HF_{11}O$ |
| Perfluorohexanol-1 | $C_6F_{13}$-OH | 336 | 128* | -33* | 1800* | $C_6HF_{13}O$ |
| Perfluorononanol-1 | $C_9F_{19}$-OH | 486 | 174* | 0* | 1885* | $C_9HF_{19}O$ |
| **PERFLUORODIALCOOLS** | | | | | | |
| Perfluorohexane diol-1,2 | $C_4F_9$-CF$<$(-OH) (-$CF_2$-OH) | 334 | 182* | -67* | 1890* | $C_6H_2F_{12}O_2$ |
| Perfluorononane diol-1,2 | $C_7F_{15}$-CF$<$(-OH) (-$CF_2$-OH) | 484 | 233* | -31* | 1975* | $C_9H_2F_{18}O_2$ |
| Perfluoroundecane diol-1,2 | $C_9F_{19}$-CF$<$(-OH) (-$CF_2$-OH) | 584 | 264* | -11* | 2040* | $C_{11}H_2F_{22}O_2$ |
| **PERFLUOROALKOXYDES** | | | | | | |
| Sodium Perfluorooctanolate-1 | $C_8F_{17}$-$O^-Na^+$ | 458 | / | / | / | $C_8F_{17}ONa$ |
| **PERFLUORODIALKOXYDES** | | | | | | |
| Disodium Perfluorononanolate-1,2 | $C_7F_{15}$-CF$<$(-$O^-Na^+$) (-$CF_2$-$O^-Na^+$) | 506 | / | / | / | $C_9F_{18}O_2Na_2$ |
| **ACIDES PERFLUOROALKYLCARBOXYQUES** | | | | | | |
| Acide heptafluorobutanoïque | $C_3F_7$-COOH | 214 | 121 | -17,5 | 1650 | $C_4HF_7O_2$ |
| Acide perfluorohexanoïque | $C_5F_{11}$-COOH | 314 | 157 | 5,6 | 1840* | $C_6HF_{11}O_2$ |
| Acide perfluorooctanoïque | $C_7F_{15}$-COOH | 414 | 189 | 30* | 1895* | $C_8HF_{15}O_2$ |
| **PERFLUOROALKYLCARBOXYLATES** | | | | | | |
| Sodium Perfluorohexanoate | $C_5F_{11}$-$COO^-Na^+$ | 338 | / | / | / | $C_6F_{11}O_2Na$ |
| **ACIDES PERFLUORO ALKYL CARBOXIMIDIQUES** | | | | | | |
| Acide perfluorohexanoïmidique | $C_5F_{11}$-CNHOH | 313 | / | / | / | $C_6H_2F_{11}NO$ |
| Acide perfluorooctanoïmidique | $C_7F_{15}$-CNHOH | 413 | / | / | / | $C_8H_2F_{15}NO$ |
| **PERFLUOROALKYLCARBOXIMIDATES** | | | | | | |
| Disodium Perfluorohexanomidate | $C_6F_{13}$-$CN^-Na^+$ $O^-Na^+$ | 407 | / | / | / | $C_7F_{13}NONa_2$ |
| **ACIDES PERFLUOROETHERALKYLCARBOXYQUES** | | | | | | |

(suite)

| TENSIOACTIFS FLUORES IONIQUES | | | | | | |
|---|---|---|---|---|---|---|
| Nom | Formule Semi-développée | Mw (g/mol) | Teb (°C) | Tfus (°C) | ρ 25°C (kg/m³) | Formule Brute |
| Acide perfluoro-2-oxa-hexanoïque | $C_4F_9$-O-COOH | 280 | *150** | *-15** | *1670** | $C_5HF_9O_3$ |
| Acide perfluoro-2-oxa-heptanoïque | $C_5F_{11}$-O-COOH | 330 | *170** | *-5** | *1690** | $C_6HF_{11}O_3$ |
| **ACIDES PERFLUOROALKYLSULFONIQUES** | | | | | | |
| Acide perfluoropentanesulfonique | $C_5F_{11}$-$SO_3H$ | 350 | / | / | / | $C_5HF_{11}O_3S$ |
| **PERFLUOROALKYLSULFONATES** | | | | | | |
| Sodium perfluoropentylsulfonate | $C_5F_{11}$-$SO_3^-Na^+$ | 372 | / | / | / | $C_5F_{11}O_3SNa$ |
| **ACIDES PERFLUOROALKYLSULFURIQUES** | | | | | | |
| Acide perfluoropentanesulfurique | $C_5F_{11}$-O-$SO_3H$ | 366 | / | / | / | $C_5HF_{11}O_4S$ |
| **PERFLUOROALKYLSULFATES** | | | | | | |
| Sodium perfluoropentylsulfate | $C_5F_{11}$-O-$SO_3^-Na^+$ | 388 | / | / | / | $C_5F_{11}O_4SNa$ |
| **ACIDES PERFLUOROALKYLETHER SULFONIQUES** | | | | | | |
| Acide perfluoro-5-oxa-nonanesulfonique | $C_4F_9$-O-$C_4F_8$-$SO_3H$ | 516 | / | / | / | $C_8HF_{17}O_4S$ |
| **PERFLUOROALKYLETHERSULFONATES** | | | | | | |
| Sodium perfluoro-5-oxa-nonanesulfonate | $C_4F_9$-O-$C_4F_8$-$SO_3^-$ $Na^+$ | 538 | / | / | / | $C_8F_{17}O_4SNa$ |
| **SELS D'HYDROFLUORODIALKYLAMMONIUM** | | | | | | |
| Chlorure de méthyle tri-(1H, 1H, 2H, 2H-perfluoroheptyl)ammonium | $CH_3$-$N^+Cl^-$<(-$((CH_2)_2(CF_2)_5F))_3$ | 988 | / | <20 | / | $C_{22}H_{15}F_{33}NCl$ |
| Chlorure de méthyle tri-(1H, 1H, 2H, 2H, 3H, 3H-perfluoroheptyl)ammonium | $CH_3$-$N^+Cl^-$<(-$((CH_2)_3(CF_2)_4)F)_3$ | 874 | / | <20 | / | $C_{22}H_{21}F_{27}NCl$ |
| Chlorure de méthyle tri-(1H, 1H-perfluorohexyl) ammonium | $CH_3$-$N^+Cl^-$<(-$(CH_2(CF_2)_5F))_3$ | 946 | / | <20 | / | $C_{19}H_9F_{33}NCl$ |
| Chlorure de méthyle tri-(1H, 1H, 2H, 2H-perfluorohexyl)ammonium | $CH_3$-$N^+Cl^-$<(-$((CH_2)_2(CF_2)_4F))_3$ | 832 | / | <20 | / | $C_{19}H_{15}F_{27}NCl$ |
| Chlorure de méthyle triperfluoropentyl ammonium | $CH_3$-$N^+Cl^-$<(-$((CF_2)_5F))_3$ | 904 | / | <20 | / | $C_{16}H_3F_{33}NCl$ |

(suite)

| TENSIOACTIFS FLUORES IONIQUES | | | | | | |
|---|---|---|---|---|---|---|
| Nom | Formule Semi-développée | Mw (g/mol) | Teb (°C) | Tfus (°C) | p 25°C (kg/m$^3$) | Formule Brute |
| Chlorure de méthyle tri-(1H, 1H-perfluoropentyl) ammonium | $CH_3-N^+Cl^-<(-(CH_2(CF_2)_4F))_3$ | 790 | / | <20 | / | $C_{16}H_9F_{27}NCl$ |
| **SELS D'HYDROFLUOROALKYLIMIDAZOLIUM** | | | | | | |
| Chlorure de 1-méthyl-3-perfluorohexyl-imidazolium | $F(CF_2)_6-_{cycle}(C_3H_3N_2)^+Cl^--CH_3$ | 449 | / | <-25 | / | $C_{10}H_6F_{13}N_2C^-$ |
| Chlorure de perfluoro-1-méthyl-3-(1H, 1H-perfluorohexyl)imidazolium | $F(CF_2)_5(CH_2)-_{cycle}(C_3H_3N_2)^+Cl^--CH_3$ | 411 | / | <-25 | / | $C_{10}H_8F_{11}N_2C^-$ |
| Chlorure de 1-méthyl-3-(1H, 1H-perfluoroheptyl)imidazolium | $F(CF_2)_6(CH_2)-_{cycle}(C_3H_3N_2)^+Cl^--CH_3$ | 463 | / | <-25 | / | $C_{11}H_8F_{13}N_2Cl$ |
| Chlorure de 1-méthyl-3-(1H, 1H, 2H, 2H -perfluoroheptyl)imidazolium | $F(CF_2)_5(CH_2)_2-_{cycle}(C_3H_3N_2)^+Cl^--CH_3$ | 425 | / | <-25 | / | $C_{11}H_{10}F_{11}N_2Cl$ |
| Chlorure de 1-méthyl-3-(1H, 1H, 2H, 2H -perfluoroctyl)imidazolium | $F(CF_2)_6(CH_2)_2-_{cycle}(C_3H_3N_2)^+Cl^--CH_3$ | 477 | / | <-25 | / | $C_{12}H_{10}F_{13}N_2Cl$ |
| Chlorure de 1-méthyl-3-(1H, 1H, 2H, 2H, 3H, 3H -perfluoroctyl)imidazolium | $F(CF_2)_5(CH_2)_3-_{cycle}(C_3H_3N_2)^+Cl^-CH_3$ | 439 | / | <-25 | / | $C_{12}H_{12}F_{11}N_2Cl$ |
| Chlorure de 1-méthyl-3-[2-(2-perfluorométhoxyéthoxy)-perfluoroéthyl] imidazolium | $CF_3(CF_2CF_2O)_2-_{cycle}(C_3H_3N_2)^+Cl^--CH_3$ | 429 | / | <-25 | / | $C_9H_6O_2F_{11}N_2Cl$ |
| **SELS D'HYDROFLUOROALKYLBORATE** | | | | | | |
| Méthyle tri-(1H, 1H, 2H, 2H-perfluoroheptyl) borate de sodium | $CH_3-B^-Na^+<(-((CH_2)_2(CF_2)_5F))_3$ | 973 | / | <20 | / | $C_{22}H_{15}F_{33}BNa$ |
| Méthyle tri-(1H, 1H, 2H, 2H, 3H, 3H-perfluoroheptyl)borate de sodium | $CH_3-BNa^+<(-((CH_2)_3(CF_2)_4F))_3$ | 859 | / | <20 | / | $C_{22}H_{21}F_{27}BNa$ |
| Méthyle tri-(1H, 1H-perfluorohexyl)borate de sodium | $CH_3-B^-Na^+<(-(CH_2(CF_2)_5F))_3$ | 931 | / | <20 | / | $C_{19}H_9F_{33}BNa$ |
| Méthyle tri-(1H, 1H, 2H, 2H-perfluorohexyl) borate de sodium | $CH_3-B^-Na^+<(-((CH_2)_2(CF_2)_4F))_3$ | 817 | / | <20 | / | $C_{19}H_{15}F_{27}BNa$ |
| Méthyle triperfluoropentylborate de sodium | $CH_3-B^-Na^+<(-((CF_2)_5F))_3$ | 889 | / | <20 | / | $C_{16}H_3F_{33}BNa$ |

(suite)

| TENSIOACTIFS FLUORES IONIQUES | | | | | | |
|---|---|---|---|---|---|---|
| Nom | Formule Semi-développée | Mw (g/mol) | Teb (°C) | Tfus (°C) | p 25°C (kg/m$^3$) | Formule Brute |
| Méthyle tri-(1H, 1H-perfluoropentyl)borate de sodium | $CH_3\text{-}B^-Na^+<(\text{-}(CH_2(CF_2)_4F))_3$ | 775 | / | <20 | / | $C_{16}H_9F_{27}BNa$ |
| **SELS D'HYDROFLUORODIALKYLCYCLOPENTADIENE DIBORATE** | | | | | | |
| 1-méthyle-3-perfluorohexyl-1, 3-dibora-2,4-cyclopentadiène de sodium | $F(CF_2)_6\text{-}_{cycle}(C_3H_3B_2)^-\ Na^+\text{-}CH_3$ | 418 | / | <-25 | / | $C_{10}H_6F_{13}B_2Na$ |
| 1-méthyle-3-(1H, 1H-perfluorohexyl)-1, 3-dibora-2,4-cyclopentadiène de sodium | $F(CF_2)_5(CH_2)\text{-}_{cycle}(C_3H_3B_2)^-Na^+\text{-}CH_3$ | 382 | / | <-25 | / | $C_{10}H_8F_{11}B_2Na$ |
| 1-méthyle-3-(1H, 1H-perfluoroheptyl)-1, 3-dibora-2,4-cyclopentadiène de sodium | $F(CF_2)_6(CH_2)\text{-}_{cycle}(C_3H_3B_2)^-Na^+\text{-}CH_3$ | 432 | / | <-25 | / | $C_{11}H_8F_{13}B_2Na$ |
| 1-méthyle-3-(1H, 1H, 2H, 2H-perfluoroheptyl)-1, 3-dibora-2,4-cyclopentadiène de sodium | $F(CF_2)_5(CH_2)_2\text{-}_{cycle}(C_3H_3B_2)^-Na^+\text{-}CH_3$ | 394 | / | <-25 | / | $C_{11}H_{10}F_{11}B_2Na$ |
| 1-méthyle-3-(1H, 1H, 2H, 2H-perfluoroctyl)-1, 3-dibora-2,4-cyclopentadiène de sodium | $F(CF_2)_6(CH_2)_2\text{-}_{cycle}(C_3H_3B_2)^-Na^+\text{-}CH_3$ | 446 | / | <-25 | / | $C_{12}H_{10}F_{13}B_2Na$ |
| 1-méthyle-3-(1H, 1H, 2H, 2H, 3H, 3H-perfluoroctyl)-1, 3-dibora-2,4-cyclopentadiène de sodium | $F(CF_2)_5(CH_2)_3\text{-}_{cycle}(C_3H_3B_2)^-Na^+\text{-}CH_3$ | 396 | / | <-25 | / | $C_{11}H_{12}F_{11}B_2Na$ |
| 1-méthyle-3-[2-(2-perfluorométhoxyéthoxy)-perfluoroéthyl]-1, 3-dibora-2,4-cyclopentadiène de sodium | $CF_3(CF_2CF_2O)_2\text{-}_{cycle}(C_3H_3B_2)^-Na^+\text{-}CH_3$ | 398 | / | <-25 | / | $C_9H_6O_2F_{11}B_2Na$ |
| **.Températures d'ébullitions, de fusion et densités estimées par une méthode d'analyse de groupes basée sur plus de 600 molécules à propriétés physiques connues ou partiellement connues.* | | | | | | |

D'autres tensioactifs fluorés ioniques décrits ci-dessous peuvent également être utilisés avec chaque groupe R1, R2, R3, R4 choisi indépendamment parmi les groupes suivants: $-((CH_2)_2(CF_2)_5F)$, $-((CH_2)_3(CF_2)_4F)$, $-((CH_2)(CF_2)_5F)$, $-((CH_2)_2(CF_2)_4F)$, $-((CF_2)_5F)$, - $((CH_2(CF_2)_4F)$, $-((CF_2)_6F)$, $-((CF_2)_4F)$, $-((CH_2)(CF_2)_6F)$, $-((CH_2)_2(CF_2)_6F)$, $-((CH_2)_3(CF_2)_5F)$, - $((CH_2)_3(CF_2)_6F)$, $-((CF_2CF_2O)_2CF_3)$ et $-CH_3$.

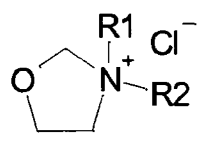
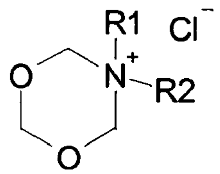
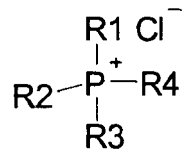

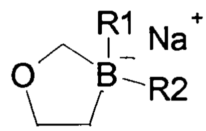
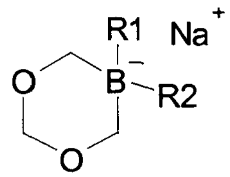
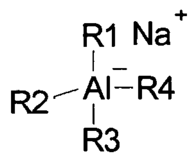

Exemple 4 : Echangeur de chaleur à contact direct travaillant à haute température.

Sur la figure 1 est représenté un premier mode de réalisation selon l'invention dans lequel l'échangeur de chaleur à contact direct 1 fonctionne à haute température. L'eau à traiter 2, ici de l'eau de mer, est comprimée par une pompe liquide 3 pour que l'eau 2 ait une pression supérieure à la pression barométrique d'une colonne 4 au niveau d'un distributeur inférieur 5, assurant la dispersion de l'eau 2 en gouttes d'eau de taille homogène sur toute une zone basse 6 de la colonne 4. Ainsi, un échange de chaleur à contact direct s'effectue dans la zone 6 à contre-courant entre l'eau 2 dispersée montante qui se réchauffe et une phase fluorée continue 7 descendante qui se refroidit.

Arrivée au niveau d'une partie supérieure 8 de la zone basse 6, l'eau 2 moins dense que le liquide fluoré hydrophobe d'échange thermique 7 et non miscible s'en sépare naturellement tandis que les gaz 9 initialement dissous dans l'eau 2 sont purgés. L'eau chaude 2 est à une pression suffisamment élevée pour qu'il n'y ait pas d'ébullition.

Elle est alors envoyée à une unité de cristallisation 10 permettant la cristallisation éventuelle des sels à solubilité inverse et leur évacuation sous forme solide. Le fond de cette unité de cristallisation 10 comprend un liquide fluoré d'échange thermique 7 sur lequel viennent se poser les cristaux de sels permettant une évacuation plus aisée des solides précipités.

A cette unité de cristallisation 10 est associée une section de clarification 11 permettant une production d'eau salée limpide 2 renvoyée vers un second distributeur 12 assurant une dispersion homogène de l'eau salée clarifiée 2 sur toute une zone haute 13 de la colonne 4. Un échange thermique est alors réalisé entre la phase dispersée montante d'eau salée 2 qui se refroidit et la phase fluorée continue 7 descendante qui se réchauffe. Ainsi, en tête de colonne 14, une eau salée froide et clarifiée 2 est produite pour alimenter une unité de dessalement 15 à fort taux de conversion d'eau.

L'échangeur de chaleur à contact direct 1 est également muni d'un système 16 de circulation en cycle fermé du liquide d'échange thermique 7 qui est collecté froid et sous pression maximale en bas de la zone basse 6 pour être recyclé en haut de la zone haute 13 et distribué sur toute la section de la colonne 4. Descendant en phase continue dans cette colonne 4, ce liquide fluoré d'échange thermique 7 réchauffé atteint un collecteur 17 situé à l'interface de la zone basse 6 et de la zone haute 13, ledit collecteur 17 assurant l'apport thermique de la colonne 4 et la distribution de la phase fluorée continue sur toute la section de la zone basse 6.

A titre d'exemple d'application, on considère un échangeur à contact direct, tel que décrit ci-avant traitant 10 000 $m^3$/jour d'eau de mer à 36 g/litre de sel, permettant de passer de 25 à 123°C par contact direct avec un liquide de phase fluorée continue (liquide d'échange thermique, LET) de type perfluorononane ($C_9F_{20}$ — $T_{eb}$=123°C, $T_{fus}$=-16°C). Une synthèse des résultats obtenus est donnée dans les deux tableaux suivants pour la zone basse 6 de préchauffage et la zone haute 13 de refroidissement respectivement :

| | | |
|---|---|---|
| Hauteur de zone basse (HTT) | m | 2,25 |
| Diamètre de colonne moyen | m | 2,44 |
| Diamètre gouttes d'eau | mm | 2 |

(suite)

| | | |
|---|---|---|
| Tentrée / Tsortie eau de mer | °C | 25/123 |
| Pentrée / Psortie eau de mer | Bar abs | 2,52/2,19 |
| ΔT bas / ΔT haut échangeur | °C | 1,0 / 1,04 |
| ΔT moyen colonne | °C | 2,49 |
| Taux de rétention | / | 17,9% |
| Vitesse relative moyenne | cm/sec | 17,1 |
| Aire interfaciale | $m^2/m^3$ | 533 |
| Coeff. Surf. d'échange thermique moyen | $kW/m^2/°C$ | 3,33 |
| Coeff. Vol. d'échange thermique moyen | $kW/m^3/°C$ | 1774 |
| Débit massique relatif de LET | / | 3,217 |
| Hauteur de zone haute (HTT) | m | 3,2 |
| Diamètre de colonne moyen | m | 2,46 |
| Diamètre gouttes d'eau | mm | 2 |
| Tentrée / Tsortie eau de mer clarifiée | °C | 120 / 30 |
| Pentrée / Psortie eau de mer clarifiée | Bar abs | 2 / 1,5 |
| ΔT bas / ΔT haut échangeur | °C | 2,9 / 3,9 |
| ΔT moyen colonne | °C | 1,61 |
| Taux de rétention | / | 18% |
| Vitesse relative moyenne | cm/sec | 22,1 |
| Aire interfaciale | $m^2/m^3$ | 545 |
| Coeff. Surf. d'échange thermique moyen | $kW/m^2/°C$ | 3,36 |
| Coeff. Vol. d'échange thermique moyen | $kW/m^3/°C$ | 1830 |
| Débit massique relatif de LET | / | 3,217 |
| *« HTT » (hauteur tangentielle totale) est la hauteur des zones d'échange par contact direct 6 et 13 respectivement sur la figure 1.* | | |

Dans cet exemple, une consommation d'énergie thermique de 7,3 $kWh/m^3$ d'eau salée est nécessaire pour prétraiter cette eau. Notons également que 2 à 5 tonnes par jour de sels à solubilité inverse doivent être évacuées ou réutilisées au moins partiellement pour potabiliser et reminéraliser l'eau dessalée.

D'un point de vue général, augmenter le taux de conversion d'une unité de dessalement a un impact direct sur les coûts de dessalement du fait d'une réduction des débits à traiter et du débit d'eau de saumure produite. Ainsi, augmenter le taux de conversion de l'eau de 50 à 80% permet de réduire le débit d'eau à traiter de 35% et de réduire le débit de saumure à gérer de 75% ce qui permet de réduire le coût unitaire du mètre cube d'eau douce produit de l'ordre de 15 à 35% en combinant l'unité décrite ci-dessus avec les technologies de dessalement actuelles.

Exemple 5 : Echangeur de chaleur à contact direct travaillant à basse température

Sur la figure 2 est représenté un second mode de réalisation selon l'invention dans lequel l'échangeur de chaleur à contact direct 1 fonctionne à basse température. L'eau à traiter 2, ici de l'eau de mer, est comprimée par une pompe liquide 3 pour que l'eau 2 ait une pression supérieure à la pression barométrique d'une colonne 4 au niveau d'un distributeur inférieur 5, assurant la dispersion de l'eau 2 en gouttes d'eau de taille homogène sur toute la zone basse 6 de la colonne 4. Ainsi, un échange de chaleur à contact direct s'effectue dans la zone 6 à contre-courant entre l'eau 2 dispersée montante qui se refroidit et la phase fluorée continue 7 descendante qui se réchauffe.

Arrivée au niveau d'une partie supérieure 8 de la zone basse 6, l'eau 2 moins dense que le liquide fluoré d'échange thermique 7 et non miscible s'en sépare naturellement.

L'eau froide 2 est alors envoyée à une unité de dessalement 15 par gel de l'eau où il y a cristallisation et séparation de l'eau à traiter sous forme d'eau douce et de saumure liquide.

La saumure ou les cristaux de glace fondus issus de 2 sont alors renvoyées vers un second distributeur 12 assurant une dispersion homogène de ceux-ci sur toute la zone haute 13 de la colonne 4. Un échange thermique est alors réalisé entre la phase dispersée montante d'eau douce ou de saumure issus de 2 qui se réchauffe et la phase fluorée continue 7 descendante qui se refroidit.

Ainsi, en tête de colonne 14, on récupère au choix une eau douce ou une saumure à température ambiante.

L'échangeur de chaleur à contact direct 1 est également muni d'un système 16 de circulation en cycle fermé du liquide fluoré d'échange thermique 7 qui est collecté à température ambiante et sous pression maximale en bas de la zone basse 6 pour être recyclé en haut de la zone haute 13 et distribué sur toute la section de la colonne 4. Descendant en phase continue dans cette colonne 4, ce liquide fluoré d'échange thermique 7 refroidi atteint un collecteur 17 situé à l'interface de la zone basse 6 et de la zone haute 13, ledit collecteur 17 assurant pour partie le refroidissement thermique de la colonne 4 et assurant la distribution de la phase fluorée continue sur toute la section de la colonne basse 6.

Exemple 6 : Echangeur de chaleur à contact direct travaillant à haute température avec une phase fluorée continue comportant un liquide fluoré hydrophobe et un tensioactif ionique à tête échangeuse d'ions.

La figure 3 illustre un troisième mode de réalisation d'une unité et d'un procédé selon l'invention dans lequel l'échangeur de chaleur et d'ions à contact direct 1 fonctionne à haute température avec une phase fluorée continue comportant un liquide fluoré hydrophobe et un tensioactif ionique à tête échangeuse d'ions.

Le fonctionnement de l'échangeur de chaleur et d'ions est identique à celui décrit dans l'exemple 4 à deux différences près :

- La phase fluorée continue d'échange thermique 7 comporte un mélange de perfluorononane avec 2% de tensioactif fluoré ionique de type hydrofluoroalkylcarboxylate de sodium, et,
- le dispositif de recyclage est non seulement muni d'un système 16 de circulation en cycle fermé mais également d'une colonne de régénération 20 du tensioactif via l'emploi à contre courant d'au moins une partie de la saumure 19 issue du système de dessalement 15.

Ainsi, une fois la réaction d'échange d'ions réalisée au niveau de la colonne 4, la phase fluorée continue comportant le liquide fluoré à tête échangeuse d'ions est évacuée vers la colonne de régénération 20 à contact direct employant la saumure riche en NaCl issue de l'unité de dessalement 15 pour que soit réalisée une réaction inverse d'échange d'ions. La phase fluorée continue régénérée est ensuite envoyée en haut de la zone haute 13 et distribuée sur toute la section de la colonne 4.

Ce troisième mode de réalisation permet la mise en oeuvre d'une extraction en continue des cations multivalents par échange cationique entre phases liquide - liquide ce qui permet un adoucissement efficace de l'eau saline tout en minimisant la production de sels cristallisés à évacuer. De plus, en travaillant à une température supérieure à 80°C, la cinétique des échanges ioniques s'en trouve améliorée tout en permettant un dégazage des gaz dissous et une destruction thermique des bio-organismes.

A titre d'exemple, dans le tableau ci-dessous est donnée la composition d'une eau de mer standard, avant et après prétraitement de l'eau, par le système décrit en figure 3.

| Eau de mer | | Brute | Prétraitée |
|---|---|---|---|
| Cations | | mg/L | mg/L |
| | $Na^+$ | 11056 | 13829 |
| | $K^+$ | 418 | 418 |
| | $Ca^{2+}$ | 418 | 0 |
| | $Sr^{2+}$ | 14 | 0 |
| | $Mg^{2+}$ | 1328 | 66 |
| Anions | | | |
| | $HCO3^-$ | 148 | 15 |
| $SO4^{2-}$ | $SO4^{2-}$ | 2765 | 2765 |

(suite)

| | | | |
|---|---|---|---|
| Anions | | | |
| | $Cl^-$ | 19811 | 19811 |
| | $Br^-$ | 68 | 68 |
| | $B(OH)_3^-$ | 25 | 25 |
| Salinité | | 36065 | 37012 |
| Gaz | 25°C | mg/kg | mg/kg |
| | $O_2$ | 6,8 | 0 |
| | $CO_2$ | 45 | 5 |
| | $N_2$ | 11,1 | 0 |

Ce système permet de mettre en oeuvre en aval un système de dessalement à taux de conversion de l'eau très supérieur à 50% pour une réduction globale du coût du dessalement.

Exemple 7 : Echangeur de chaleur à contact direct travaillant à haute température avec une phase fluorée continue comportant un liquide fluoré hydrophobe et un couple de tensioactifs ioniques à têtes échangeuse d'ions pour le dessalement de l'eau.

La figure 7 illustre un mode de réalisation de l'unité et du procédé selon l'invention dans lequel l'échangeur 1 de prétraitement à contact direct de chaleur et ionique fonctionne à haute température avec une phase fluorée continue comportant un liquide fluoré hydrophobe, ici un hydrofluorocarbure, et un couple de tensioactifs cationiques et anioniques, ici des sels d'hydrofluoroalkylammonium et d'hydrofluoroalkylborate.

Le fonctionnement de l'échangeur de chaleur et ionique de l'exemple 7 est identique à celui décrit dans l'exemple 6. L'unité et le procédé de l'exemple 7 comportent les caractéristiques additionnelles suivantes.

La phase fluorée continue chargée en ions 21 est récupérée en pied de colonne au niveau de l'extrémité inférieure 5 de l'échangeur 1. L'eau traitée 30 est récupérée au niveau de l'extrémité supérieure 14 de l'échangeur 1. Une unité de dessalement 15 met en oeuvre une étape de traitement de l'eau 2 par dessalement postérieure à l'étape de récupération de l'eau traitée 30.

La phase continue fluorée récupérée 21 de l'échangeur 1 est introduite au niveau d'une extrémité supérieure 22 de l'échangeur 20 de régénération. Une eau de régénération est introduite au niveau d'une extrémité inférieure 24 sous pression sous forme de gouttes d'eau de façon à réaliser un échange d'ions, voire de chaleur, à contre-courant entre les gouttes d'eau ascendantes de l'eau de régénération et la phase fluorée continue récupérée 21 descendante. L'eau de régénération comprend une partie 19A de la saumure 19 et/ou de l'eau dessalée 23 issue(s) de l'unité de dessalement 15 qui est alimenté par l'eau traitée récupérée 30 au niveau de l'extrémité supérieure 14 de l'échangeur 1. Une partie 19B de la saumure 19 forme une partie de l'eau 2 à traiter qui est introduite au niveau de l'extrémité inférieure 5 de l'échangeur 1. La partie 19B est envoyée vers l'extrémité inférieure 5 au moyen d'une pompe 27.

Les ions de la phase fluorée continue récupérée 21 sont échangés depuis la phase fluorée continue récupérée 21 vers l'eau de régénération 19, 23. La phase fluorée continue régénérée 18 déchargée en ions est collectée au niveau de l'extrémité inférieure 24 et introduite au niveau de l'extrémité supérieure 14 de l'échangeur de prétraitement au moyen d'une pompe 25. Elle constitue alors la phase continue fluorée 7 descendante de l'échangeur 1. L'eau de régénération chargée en ions 26 est récupérée au niveau de l'extrémité supérieure 22 de l'échangeur de régénération 20.

A titre d'exemple, dans le tableau ci-dessous est donnée la composition d'une eau de mer standard, avant (eau 2) et après (eau 30) prétraitement de l'eau, par le système décrit en figure 7.

| **Eau de mer** | | **Brute** | **Prétraitée** |
|---|---|---|---|
| Cations | | mg/L | mg/L |
| | $Na^+$ | 11056 | 1658 |
| | $K^+$ | 418 | 12 |
| | $Ca^{2+}$ | 418 | 0 |
| | $Sr^{2+}$ | 14 | 0 |
| | $Mg^{2+}$ | 1328 | 0 |

(suite)

| | | | |
|---|---|---|---|
| Anions | | | |
| | HC03- | 148 | 0 |
| | $SO4^{2-}$ | 2765 | 765 |
| | $Cl^-$ | 19811 | 2571 |
| | $Br^-$ | 68 | 0 |
| | $B(OH)_3^-$ | 25 | 0 |
| Salinité | | 36065 | 4242 |
| Gaz | 25°C | mg/kg | mg/kg |
| | $O_2$ | 6,8 | 0 |
| | $CO_2$ | 45 | 5 |
| | $N_2$ | 11,1 | 0 |

**Revendications**

**1.** Unité de prétraitement d'eau, comprenant un échangeur de chaleur et/ou d'ions à contact direct présentant une phase fluorée continue qui comporte un liquide fluoré non miscible à l'eau, de densité supérieure à 1,25.

**2.** Unité selon la revendication précédente, dans laquelle le liquide fluoré non miscible à l'eau de la phase fluorée est constitué par un composé de formule brute $C_nH_mF_pN_qO_xS_y$, dans laquelle :

- C, H, F, N, O, S représentent respectivement un atome de carbone, d'hydrogène, de fluor, d'azote, d'oxygène et de soufre,
- n est un nombre entier compris entre 3 et 25, de préférence entre 3 et 12, bornes incluses,
- m est un nombre entier compris entre 0 et 27, de préférence entre 0 et 20, bornes incluses,
- p est un nombre entier compris entre 5 et 54, de préférence entre 5 et 27, bornes incluses,
- q est un nombre entier compris entre 0 et 6, de préférence entre 0 et 3, bornes incluses,
- x est un nombre entier compris entre 0 et 10, de préférence entre 0 et 7, bornes incluses,
- y est un nombre entier compris entre 0 et 6, de préférence entre 0 et 3, bornes incluses.

**3.** Unité selon l'une quelconque des revendications précédentes, dans lequel le liquide fluoré non miscible à l'eau est défini par un rapport m/p égal à un réel inférieur ou égal à 1 avec m le nombre d'atomes d'hydrogène et p le nombre d'atomes de fluor contenus dans la molécule du liquide fluoré non miscible à l'eau.

**4.** Unité selon l'une quelconque des revendications précédentes, dans laquelle le liquide fluoré non miscible à l'eau de la phase fluorée est un perfluorocarbure (PFC) ou dérivé.

**5.** Unité selon la revendication 3, dans laquelle le liquide fluoré non miscible à l'eau de la phase fluorée est un hydrofluorocarbure (HFC) ou dérivé dont le rapport m/p est un réel strictement supérieur à 0 et inférieur ou égal à 1.

**6.** Unité selon la revendication 4 ou 5, dans laquelle le dérivé comporte au moins un hétéroatome sélectionné parmi l'azote, l'oxygène et le soufre.

**7.** Unité selon l'une quelconque des revendications précédentes, dans lequel l'échangeur est un échangeur de chaleur dans lequel la phase fluorée comporte, en outre, un tensioactif fluoré non ionique.

**8.** Unité selon la revendication précédente, dans lequel le tensioactif fluoré non ionique est défini par un rapport e/f égal à un réel inférieur ou égal à 1 avec e le nombre d'atomes d'hydrogène et f le nombre d'atomes de fluor contenus dans la molécule du tensioactif fluoré non ionique.

**9.** Unité selon l'une quelconque des revendications précédentes, dans laquelle l'échangeur de chaleur est composé

de deux parties :

- une partie de refroidissement visant à refroidir l'eau à traiter,
- une partie de réchauffement visant à réchauffer l'eau à traiter,
- la phase continue fluorée qui se refroidit dans la partie de réchauffement étant réutilisée en tant que phase continue fluorée qui se réchauffe dans la partie de refroidissement.

**10.** Unité selon la revendication 9, comportant également une unité de cristallisation, située à une interface des parties de refroidissement et de réchauffement.

**11.** Unité selon l'une quelconque des revendications précédentes, présentant une phase fluorée continue, dans laquelle l'échangeur comporte un dispositif de recyclage de la phase fluorée continue.

**12.** Procédé de prétraitement de l'eau mettant en oeuvre une unité de prétraitement selon la revendication 1, et comprenant les étapes suivantes :

- introduction de la phase fluorée au niveau d'une extrémité supérieure d'une des parties de l'échangeur (1) et introduction de l'eau (2), au niveau d'une extrémité inférieure (5) d'une des parties de l'échangeur (1) de façon à réaliser un échange de chaleur et d'ions à contre-courant entre l'eau ascendante (2) et la phase fluorée descendante (7), et,
- récupération de l'eau prétraitée (30).

**13.** Procédé selon la revendication 12, comprenant, en outre, une étape d'introduction de la phase fluorée sous forme continue et dans lequel l'introduction de l'eau (2) est faite sous forme dispersée.

**14.** Procédé selon la revendication 12 ou 13, mettant en oeuvre une unité de prétraitement comprenant un échangeur d'ions et comportant, en outre, les étapes suivantes:

— récupération de la phase fluorée (21) obtenue au niveau de l'extrémité inférieure (5) d'un premier échangeur (1), dit de prétraitement,
— introduction de la phase fluorée récupérée (21) au niveau d'une extrémité supérieure (22) d'une des parties d'un second échangeur (20), dit de régénération, de l'unité de prétraitement,
— introduction d'une eau de régénération (19A, 23) au niveau d'une extrémité inférieure (24) d'une des parties de l'échangeur de régénération (20) de façon à réaliser un échange d'ions à contre-courant entre l'eau de régénération ascendante (19A, 23) et la phase fluorée récupérée descendante (21),
— récupération de la phase fluorée régénérée (18), et
— introduction de la phase fluorée régénérée (18) au niveau d'une partie supérieure (14) de l'échangeur de prétraitement (1).

**15.** Procédé de traitement de l'eau, comprenant le procédé de prétraitement selon l'une quelconque des revendications 12 à 14 et comportant, en outre, une étape de traitement par dessalement postérieure à l'étape de récupération de l'eau prétraitée (30).

**16.** Procédé selon la revendication précédente comprenant le procédé de prétraitement selon la revendication 14, dans lequel l'eau de régénération (19A, 23) comprend au moins en partie l'eau dessalée (23) lors de l'étape de traitement (19A, 23).

**17.** Utilisation d'un échangeur à contact direct comportant comme phase continue un liquide fluoré non miscible à l'eau, de densité supérieure à 1,25, pour le traitement de l'eau et en particulier, pour le prétraitement d'eau saline.

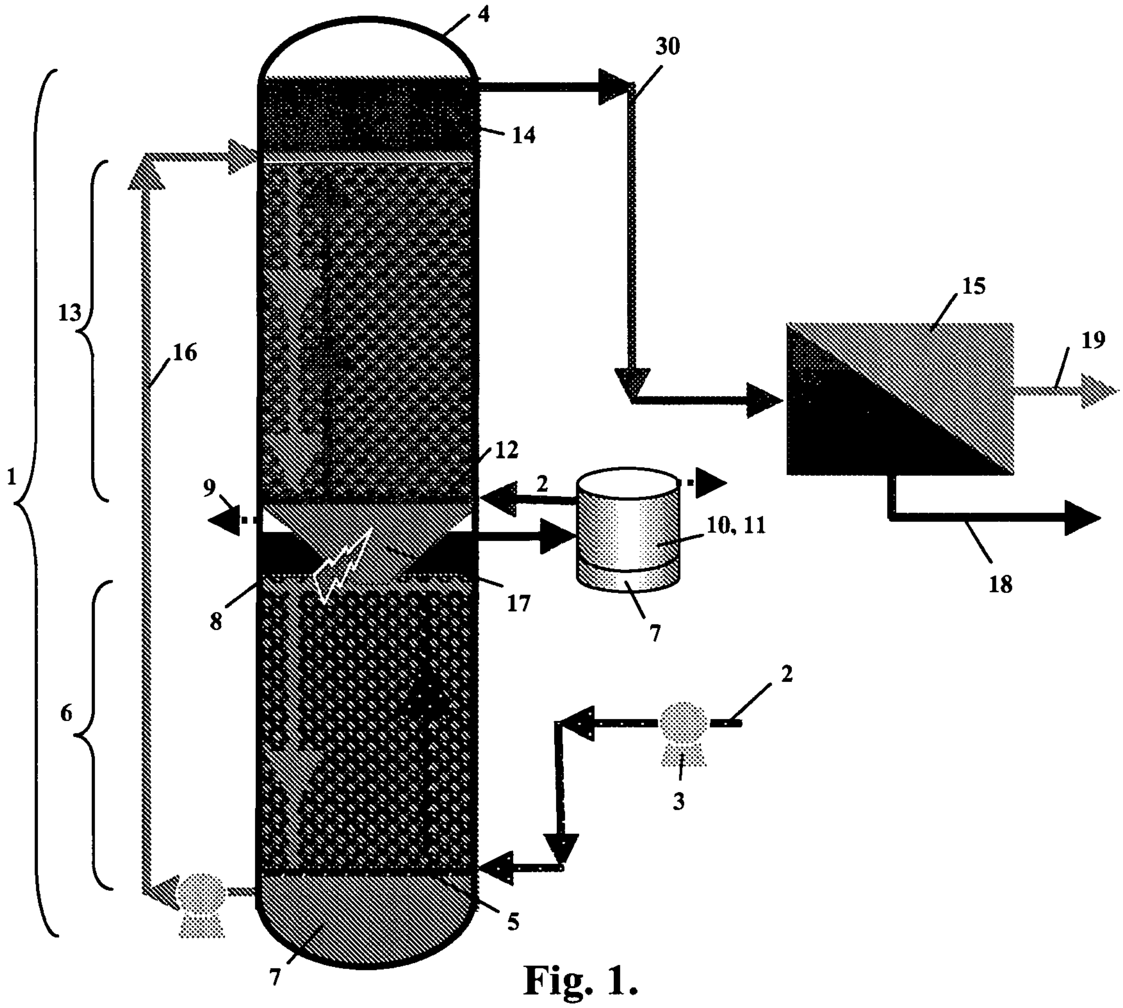


Fig. 1.

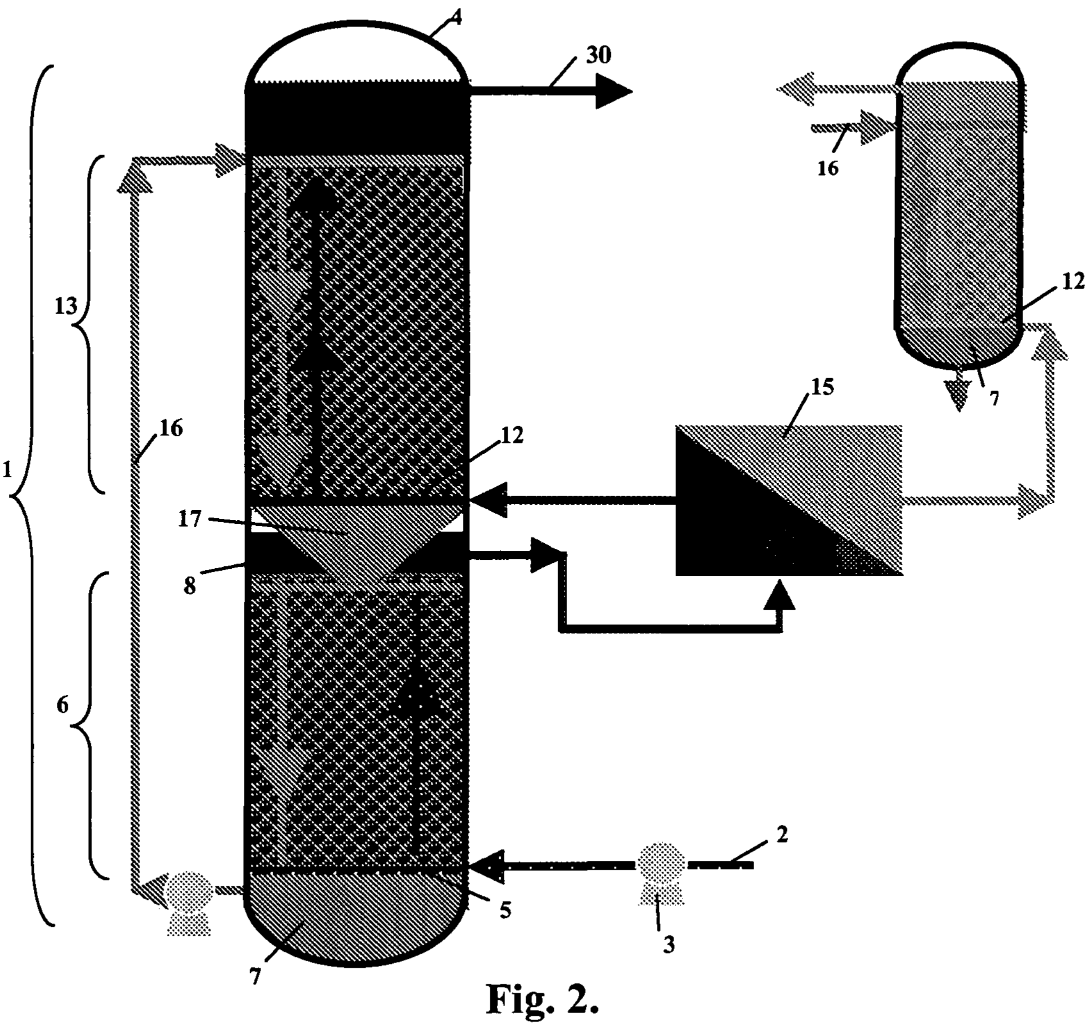


Fig. 2.

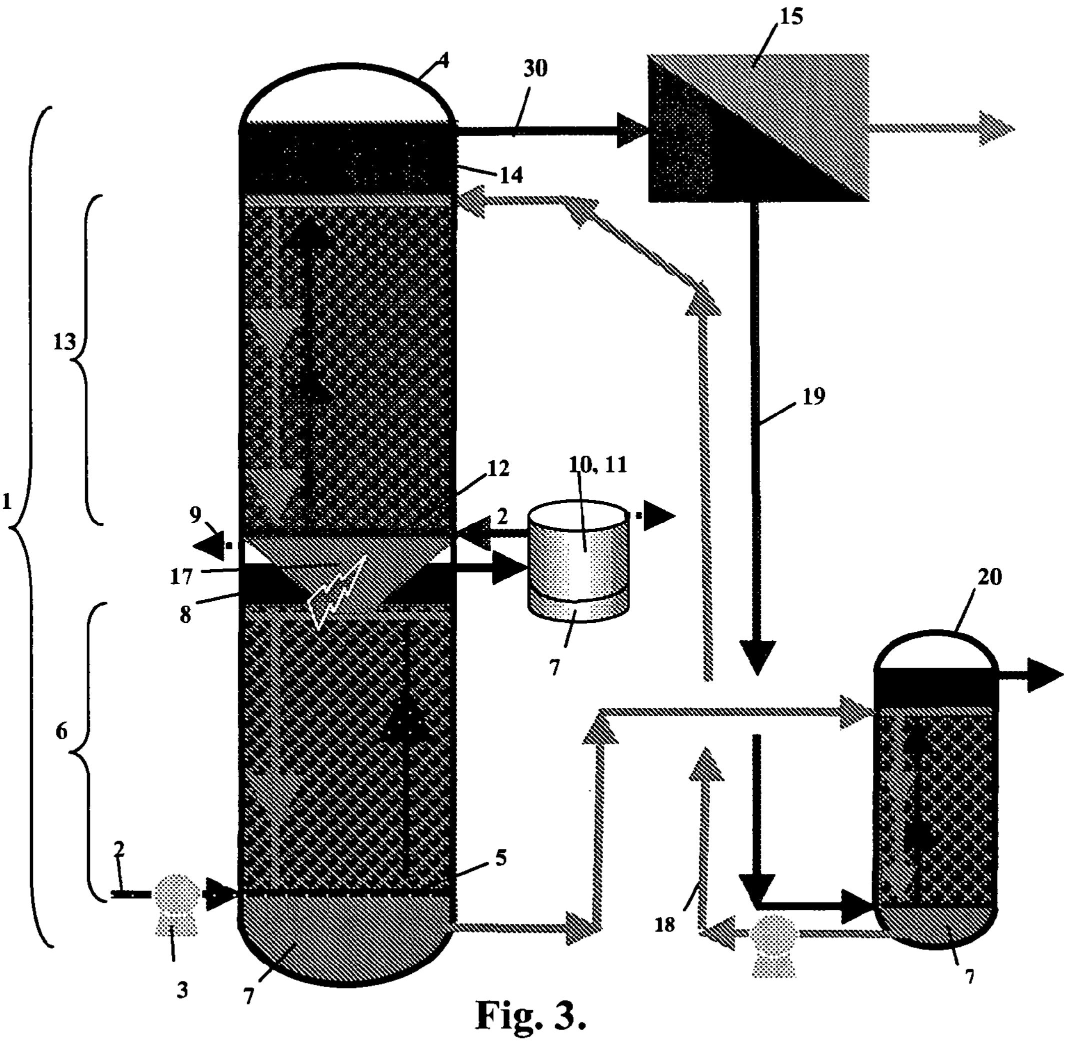


Fig. 3.

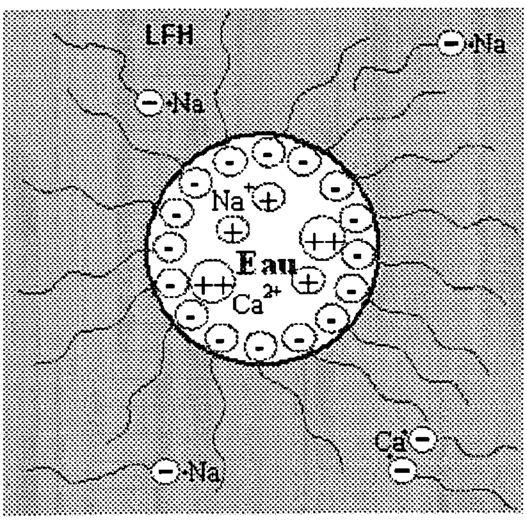


Fig. 4.

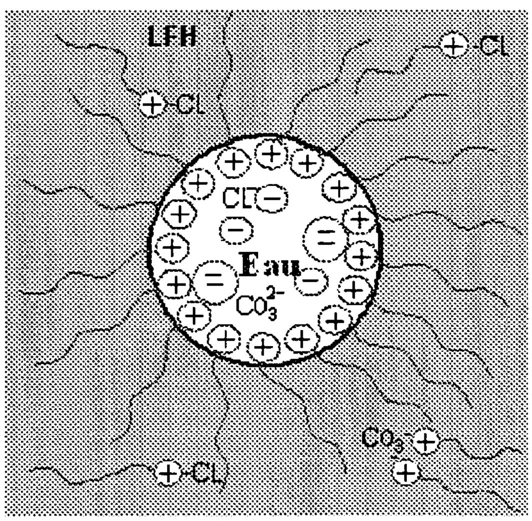


Fig. 5.

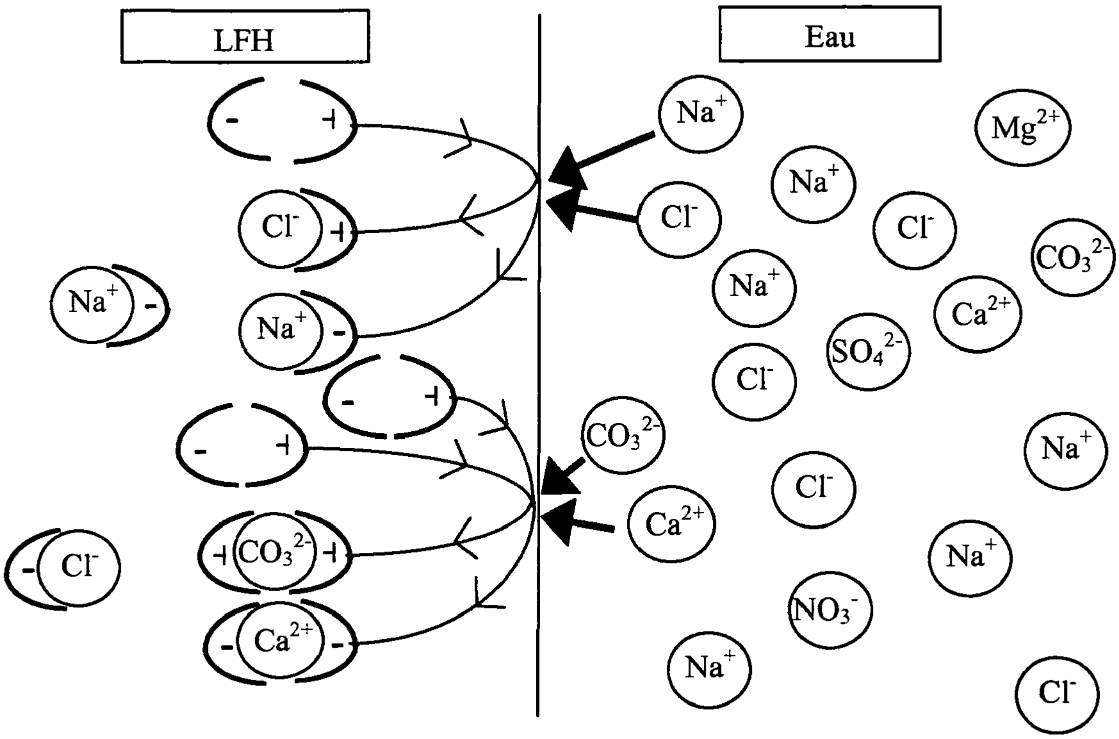
LFH
Eau
Na+
Mg2+
Na+
Cl-
Cl-
Cl-
CO32-
Na+
Na+
Na+
Ca2+
SO42-
Cl-
CO32-
Na+
Cl-
Cl-
CO32-
Ca2+
Na+
Ca2+
NO3-
Na+
Cl-

Fig. 6

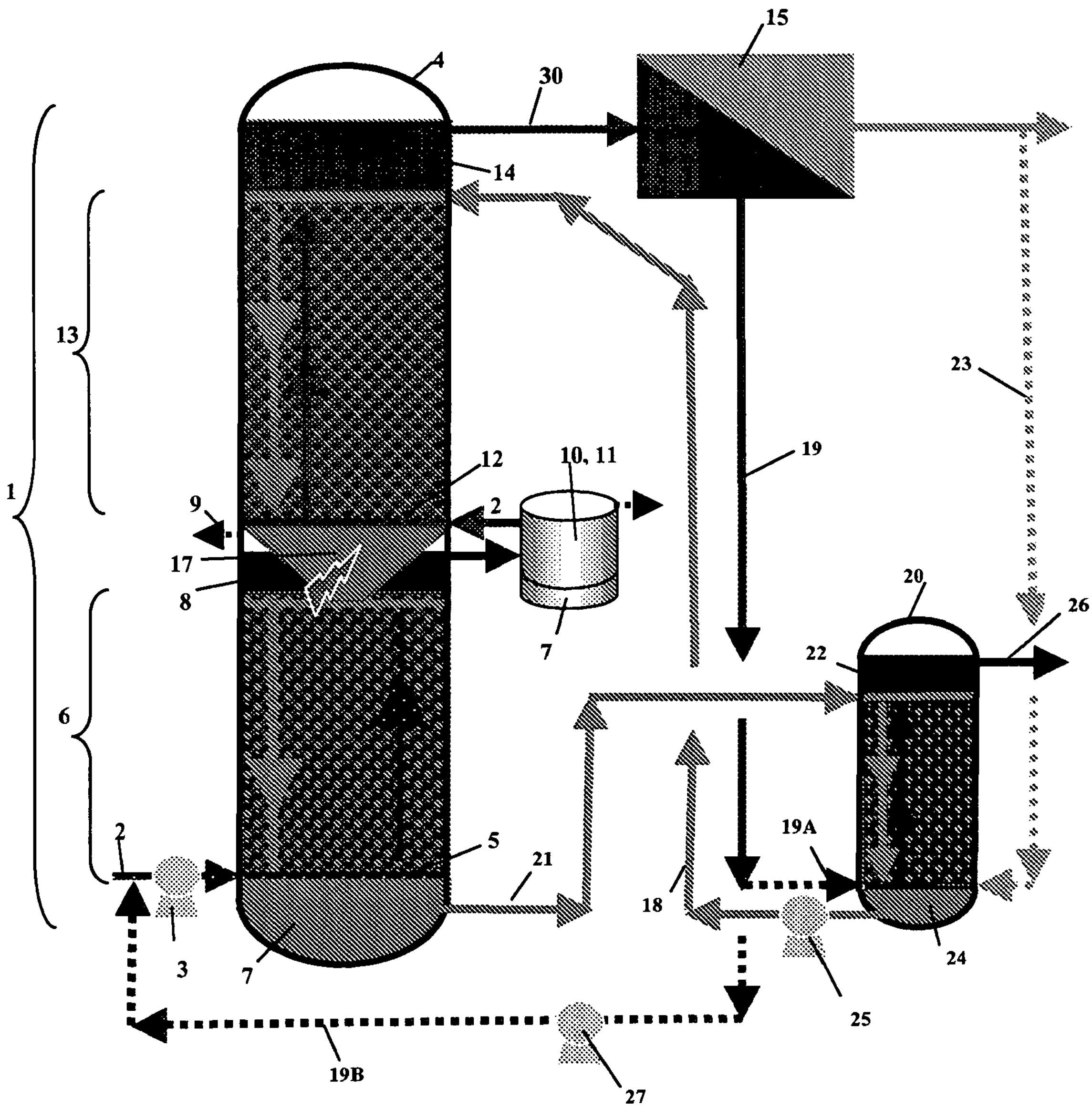
15
4
30
14
13
1
12
10, 11
2
9
17
8
7
6
19
23
20
26
22
2
5
3
7
21
18
19A
24
25
19B
27

Fig. 7

Europäisches Patentamt
European Patent Office
Office européen des brevets

# RAPPORT DE RECHERCHE EUROPEENNE

Numéro de la demande
EP 11 17 6751

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 4 238 296 A (SADHUKHAN PASUPATI [US]) 9 décembre 1980 (1980-12-09)<br>* colonne 2, ligne 60 - colonne 4, ligne 5 * | 1-17 | INV.<br>C02F1/10<br>F28C3/04<br><br>ADD.<br>C02F103/08 |
| X | GB 1 363 449 A (HYDRO CHEM & MINERAL CORP) 14 août 1974 (1974-08-14)<br>* page 3, ligne 52 - ligne 98 *<br>* page 4, ligne 107 - page 5, ligne 49 *<br>* figures 1,6 * | 1-17 | |
| A | HAGIWARA Y ET AL: "Interaction between near-wall turbulence structure and immiscible droplets falling with wobbling motion in upward water flow",<br>ENERGY, PERGAMON PRESS, OXFORD, GB,<br>vol. 30, no. 2-4,<br>1 février 2005 (2005-02-01), pages 181-195, XP025263397,<br>ISSN: 0360-5442, DOI: 10.1016/J.ENERGY.2004.04.042<br>[extrait le 2005-02-01]<br>* le document en entier * | 1-17 | DOMAINES TECHNIQUES RECHERCHES (IPC)<br>C02F<br>F28C |

Le présent rapport a été établi pour toutes les revendications

1

| Lieu de la recherche | Date d'achèvement de la recherche | Examinateur |
|---|---|---|
| La Haye | 2 mai 2012 | Liebig, Thomas |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE RELATIF A LA DEMANDE DE BREVET EUROPEEN NO.** EP 11 17 6751

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02-05-2012

| Document brevet cité au rapport de recherche | Date de publication | Membre(s) de la famille de brevet(s) | Date de publication |
|---|---|---|---|
| US 4238296 A | 09-12-1980 | AUCUN | |
| GB 1363449 A | 14-08-1974 | AU 3446671 A | 19-04-1973 |
| | | BE 773836 A1 | 12-04-1972 |
| | | DE 2150824 A1 | 13-04-1972 |
| | | FR 2110379 A1 | 02-06-1972 |
| | | FR 2217278 A1 | 06-09-1974 |
| | | GB 1363449 A | 14-08-1974 |
| | | GB 1365864 A | 04-09-1974 |
| | | IT 939533 B | 10-02-1973 |
| | | NL 7113974 A | 14-04-1972 |
| | | OA 3839 A | 24-12-1971 |
| | | ZA 7106676 A | 26-07-1972 |

EPO FORM P0460

Pour tout renseignement concernant cette annexe : voir Journal Officiel de l'Office européen des brevets, No.12/82